# EUROPEAN PATENT APPLICATION

(11) **EP 2 484 887 A1**
(43) Date of publication of application: **08.08.2012**
(21) Application number: 10820327.4
(22) Date of filing: 10.09.2010
(51) Int. Cl.: F02M 21/06, F02M 21/02

(54) **LPG FUEL HEATING DEVICE AND PRESSURE REDUCING VALVE FOR LPG FUEL**

(30) Priority: 30.09.2009 JP 2009227900
(71) Applicant: Keihin Corporation, Tokyo 163-0539 (JP)
(72) Inventor: HATAKEYAMA Takushi, Kakuda-shi Miyagi 981-1505 (JP)
(74) Representative: Trossin, Hans-Jürgen
(86) International application number: PCT/JP2010/065605
(87) International publication number: WO 2011/040207

(57) **Abstract**

An LPG fuel heating device configured in such a manner that the heat source for heating LPG fuel which flows through a gas path is provided to a path-forming body at a position outside the gas path. A longitudinal protrusion wall (125) of the gas path, the longitudinal protrusion wall (125) extending in the reference flow direction in the gas path (93), and widthwise protrusion walls (126) of the gas path, the widthwise protrusion walls (126) extending in the widthwise direction of the gas path (93) so as to intersect the reference flow direction (124), are provided to the path-forming body so as to protrude into the gas path (93). Path chambers (127) and communication paths (128, 129) which connect mutually adjacent path chambers (127) so as to allow the LPG fuel to sequentially flow through the path chambers (127) are formed within the gas path (93) by cooperation among the path-forming body, the longitudinal protrusion wall (125) of the gas path, and the widthwise protrusion walls (126) of the gas path. By this, the communication paths (128, 129) are disposed so as to cause the LPG fuel to sequentially flow in a zigzag course through the path chambers (127). The configuration increases the heat transfer efficiency from the heat source to the LPG fuel and increases the vaporization performance for the liquid component of the LPG fuel.

## Description

### TECHNICAL FIELD

The present invention relates to: an LPG fuel heating device in which a heat source for heating LPG fuel circulating through a gas passage formed in a passage forming body is placed in the passage forming body outside of the gas passage; and a pressure reducing valve for LPG fuel to which such an LPG fuel heating device is annexed.

### BACKGROUND ART

Patent Document 1 has made known an LPG fuel heating device in which: a cooling water passage through which engine cooling water circulates is formed around a gas passage; and heat from the engine cooling water is transferred to the LPG fuel in the gas passage via gas passage wall surfaces and fins which are placed inside of the gas passage, and which continues to the gas passage wall surfaces.

### PRIOR ART DOCUMENT

### PATENT DOCUMENT

Patent Document 1: Japanese Patent Application Laid-open No. 2005-325690

### SUMMARY OF INVENTION

### PROBLEMS TO BE SOLVED BY THE INVENTION

The LPG fuel heating device, which is disclosed in Patent Document 1 given above, aims to enhance its efficiency of heat transfer by increasing the area of the contact of the LPG fuel with the gas passage wall surfaces and the fins. Although, however, its intention is to make the flow of the LPG fuel meander by use of the fins, the actual main flow of the LPG fuel still tends to pass through the gas passage in a shortest distance. For this reason, the LPG fuel flows near the tip ends of the respective fins, and the area of the contact of the LPG fuel with the gas passage wall surfaces and the fins decreases accordingly. Because the LPG fuel flows in places away from the heat source, the efficiency of heat transfer to the LPG fuel is not as high as expected. Such discrepancy is obvious particularly when the flow rate per unit time at which the LPG fuel circulates through the gas passage is high.

The present invention has been made with such situations taken into consideration. An object of the present invention is to provide: an LPG fuel heating device which aims to increase the efficiency of heat transfer from a heat source to LPG fuel, and to enhance the evaporation performance of a liquid component of the LPG fuel; and a pressure reducing valve for LPG fuel.

### MEANS FOR SOLVING THE PROBLEMS

In order to attain the above object, according to a first aspect of the present invention, there is provided an LPG fuel heating device in which a heat source for heating LPG fuel circulating through a gas passage formed in a passage forming body is placed in the passage forming body outside of the gas passage, characterized in that one or a plurality of passage-longitudinal-direction protruding walls and a plurality of passage-width-direction protruding walls are provided to the passage forming body in such a way as to enter the gas passage, the passage-longitudinal-direction protruding wall extending in a normal circulation direction of the LPG fuel from a starting point to an end point of the gas passage, the passage-width-direction protruding walls being orthogonal to the normal circulation direction and extending in a width direction of the gas passage, a plurality of passage chambers and a plurality of communicating passages are formed in the gas passage through cooperation among the passage forming body, the passage-longitudinal-direction protruding wall and the passage-width-direction protruding walls, the communicating passages configured to make mutually adjacent ones of the passage chambers communicate with each other in a way that makes the LPG fuel sequentially circulate through the passage chambers, and the communicating passages are disposed in a way that makes the LPG fuel sequentially circulate through the plurality of passage chambers from the starting point to the end point of the gas passage zigzaggedly.

Further, according to a second aspect of the present invention, in addition to the configuration of the first aspect, a first communicating passage and a second communicating passage are disposed on sides opposite to each other in a protruding direction of the passage-longitudinal-direction protruding wall, the first communicating passage connecting two passage chambers which are adjacent to each other with the passage-longitudinal-direction protruding wall interposed in between, the second communicating passage connecting two passage chambers which are adjacent to each other with one corresponding passage-width-direction protruding wall interposed in between.

According to a third aspect of the present invention, in addition to the configuration of the second aspect, a length of the passage chamber in the normal circulation direction is set larger than a width of the passage chamber in the width direction of the gas passage, and the heat source is placed in a location where a gas passage wall on a side of the second communicating passage among paired gas passage walls which face the gas passage in the protruding direction of the passage-longitudinal-direction protruding wall is interposed between the heat source and the gas passage.

According to a fourth aspect of the present invention, in addition to the configuration of the third aspect, the passage-longitudinal-direction protruding wall is projectingly provided to the gas passage wall on the side of the second communicating passage.

According to a fifth aspect of the present invention, in addition to any one of the configurations of the first to fourth aspects, a body and a gas passage cover member, which is attached to one surface of the body, constitute at least part of the passage forming body, the gas passage is formed from a gas passage groove provided to the one surface of the body and the gas passage cover member configured to cover the gas passage groove, and the passage-longitudinal-direction protruding wall and the passage-width-direction protruding wall are each projectingly provided to either a bottom wall of the gas passage groove or the gas passage cover member.

According to a sixth aspect of the present invention, in addition to the configuration of the fifth aspect, one of the passage-longitudinal-direction protruding wall and the passage-width-direction protruding wall is projectingly provided to one of the bottom wall of the gas passage groove and the gas passage cover member, while the other of the passage-longitudinal-direction protruding wall and the passage-width-direction protruding wall is projectingly provided to the other of the bottom wall of the gas passage groove and the gas passage cover member.

According to a seventh aspect of the present invention, in addition to the configuration of the fifth or sixth aspect, the first communicating passage is formed between a tip end of the passage-longitudinal-direction protruding wall and the bottom wall of the gas passage groove or the gas passage cover member, while a cutout is provided to a tip end of the passage-width-direction protruding wall, the cutout configured to form the second communicating passage between the tip end of the passage-width-direction protruding wall and the gas passage cover member or the bottom wall of the gas passage groove.

According to an eighth aspect of the present invention, in addition to any one of the configurations of the fifth to seventh aspects, a heated fluid passage groove is provided to an opposite surface, which is on a side opposite from the gas passage, of the body and a heated fluid passage cover member is attached to the opposite surface of the body while covering the heated fluid passage groove, a heated fluid passage through which engine cooling water as the heat source circulates being formed between the heated fluid passage cover member and the heated fluid passage groove.

According to a ninth aspect of the present invention, in addition to any one of the configurations of the first to eighth aspects, engine cooling water as the heat source is guided to at least one of the inside of the passage-longitudinal-direction protruding wall and the inside of the passage-width-direction protruding wall.

According to a tenth aspect of the present invention, in addition to the configuration of the eighth or ninth aspect, the engine cooling water is guided to the inside of a protruding wall, which is projectingly provided to the body, among the passage-longitudinal-direction protruding wall and the passage-width-direction protruding wall.

According to an eleventh aspect of the present invention, in addition to the configuration of the tenth aspect, the passage-longitudinal-direction protruding wall is projectingly provided to the bottom wall of the gas passage groove, while the passage-width-direction protruding walls are projectingly provided to the gas passage cover member, and the engine cooling water is guided to the inside of the passage-longitudinal-direction protruding wall.

According to a twelfth aspect of the present invention, in addition to any one of the configurations of the first to eleventh aspects, a minute clearance is formed between the passage-width-direction protruding wall, which is projectingly provided to a gas passage wall forming one side surface of the gas passage, and the passage-longitudinal-direction protruding wall or another gas passage wall of the gas passage.

According to a thirteenth aspect of the present invention, there is provided an LPG fuel heating device in which a heat source for heating LPG fuel circulating through a gas passage formed in a passage forming body is placed in the passage forming body outside of the gas passage, characterized in that the gas passage is formed in a way that makes the LPG fuel circulate via a three-dimensional circulation path including a flow in a width direction of the gas passage and a flow in a direction orthogonal to the width direction of the gas passage in combination.

According to a fourteenth aspect of the present invention, there is provided a pressure reducing valve for LPG fuel, wherein the LPG fuel heating device according to any one of the configurations of the first to thirteenth aspects is annexed to the pressure reducing valve for LPG fuel.

According to a fifteenth aspect of the present invention, in addition to the configuration of the fourteenth aspect, a body configured to house a valve mechanism is formed as part of the passage forming body.

It should be noted that: a gas passage cover member 18 and a bottom wall 92a of a gas passage groove 92 of embodiments correspond to the gas passage walls of the present invention; a valve housing 21 of the embodiments corresponds to the passage forming body of the present invention; and a low-pressure gas passage 93 of the embodiments corresponds to the gas passage of the present invention.

### EFFECTS OF THE INVENTION

The first aspect of the present invention elongates the circulation path of the LPG fuel in the gas passage, increases the area of the contact of the LPG fuel with the passage forming body, the passage-longitudinal-direction protruding wall and the passage-width-direction protruding walls, as well as enhances the efficiency of heat transfer to the LPG fuel. This is because: the multiple passage chambers and the multiple communicating passages, which are configured to make mutually adjacent ones of the passage chambers communicate with each other in a way that makes the LPG fuel sequentially circulate through the passage chambers, are formed in the gas passage through cooperation among the passage forming body, the passage-longitudinal-direction protruding wall and the passage-width-direction protruding walls; and the communicating passages are disposed in a way that makes the LPG fuel sequentially circulate through the multiple passage chambers from the starting point to the end point of the gas passage while passing through the passage chambers zigzaggedly. In addition, the first aspect of the present invention makes it possible to remarkably enhance the efficiency of heat transfer when the flow rate per unit time is large, compared with the prior art using fins.

In addition, the second aspect of the present invention increases the area of the contact of the LPG fuel with the heat transfer surface, and can further enhance the efficiency of heat transfer, because the LPG fuel not only circulates through the inside of the gas passage zigzaggedly, but also follows the winding path in a direction orthogonal to the width direction of the gas passage.

The third aspect of the present invention can much further enhance the efficiency of heat transfer by putting the LPG fuel, which circulates in the normal circulation direction while passing through the second communicating passage, closer to the heat source, because the heat source is placed with the gas passage wall, on the side of the second communicating passage, interposed between the heat source and the gas passage under the condition that the length of the passage chamber in the normal circulation direction is set larger than the width of the passage chamber in the width direction of the gas passage.

The fourth aspect of the present invention makes it easy for heat from the heat source to be transferred to the passage-longitudinal-direction protruding wall, and can enhance the efficiency of heat transfer by making much of the heat from the passage-longitudinal-direction protruding wall, which extends long in the normal circulation direction of the gas passage, transfer to the LPG fuel, because the passage-longitudinal-direction protruding wall is projectingly provided to the gas passage wall on the side of the second communicating passage.

The fifth aspect of the present invention makes it easy to form the passage-longitudinal-direction protruding wall and the passage-width-direction protruding wall, because: the gas passage is formed from the gas passage groove provided to the one surface of the body and the gas passage cover member configured to cover the gas passage groove; and the passage-longitudinal-direction protruding wall and the passage-width-direction protruding wall are each projectingly provided to either the bottom wall of the gas passage groove or the gas passage cover member.

The sixth aspect of the present invention makes it further easier to form the passage-longitudinal-direction protruding wall and the passage-width-direction protruding walls, because the passage-longitudinal-direction protruding wall and the passage-width-direction protruding walls are projectingly provided to the bottom wall of the gas passage groove and the gas passage cover member by not being provided to the same component.

The seventh aspect of the present invention make it easy to form the first and second communicating passages, because the first communicating passage is formed between the tip end of the passage-longitudinal-direction protruding wall and the bottom wall of the gas passage groove or the gas passage cover member while the cutout configured to form the second communicating passage between the tip end of the passage-width-direction protruding wall and the gas passage cover member or the bottom wall of the gas passage groove is provided to the tip end of the passage-width-direction protruding wall.

The eighth aspect of the present invention makes it possible to form the heated fluid passage easily, and enhances the efficiency of heat transfer by enabling the heated fluid passage to be disposed closer to the gas passage, as well as makes it possible to build the heating device in a compact size, because the heated fluid passage, through which the engine cooling water as the heat source circulates, is formed from the heat fluid passage groove provided to the body and the heated fluid passage cover member attached to the body while covering the heated fluid passage groove.

The ninth aspect of the present invention effectively heats at least one of the passage-longitudinal-direction protruding wall and the passage-width-direction protruding wall with the engine cooling water, and makes at least one of the passage-longitudinal-direction protruding wall and the passage-width-direction protruding wall effectively function as the surface for transferring the heat to the LPG fuel, as well as can further enhance the efficiency of heat transfer, because the engine cooling water is guided to at least one of the inside of the passage-longitudinal-direction protruding wall and the inside of the passage-width-direction protruding wall.

The tenth aspect of the present invention makes it possible to easily build the structure for guiding the engine cooling water to the inside of the protruding wall, because the engine cooling water is guided to the inside of the protruding wall which is projectingly provided to the body.

The eleventh aspect of the present invention makes it possible to easily build the structure for guiding the engine cooling water to the inside of the passage-longitudinal-direction protruding wall, because: the passage-longitudinal-direction protruding wall is projectingly provided to the bottom wall of the gas passage groove formed in the body; and the engine cooling water is guided to the inside of the passage-longitudinal-direction protruding wall.

The twelfth aspect of the present invention makes the LPG fuel less likely to stagnate by making a small amount of LPG fuel circulate through the minute clearance formed between the passage-width-direction protruding wall and the passage-longitudinal-direction protruding wall or the other gas passage wall of the gas passage, although the LPG fuel is likely to stagnate near a wall surface of the passage-width-direction protruding wall, which faces downstream in the normal circulation direction. The twelfth aspect of the present invention can contribute to the enhancement of the efficiency of heat transfer by effectively using the wall surface of the passage-width-direction protruding wall, which faces downstream in the normal circulation direction, as the heat transfer surface.

The thirteenth aspect of the present invention elongates the circulation path of the LPG fuel, and increases the area of the contact of the LPG fuel with the heat transfer surface, as well as enhances the efficiency of heat transfer to the LPG fuel, because the LPG fuel circulates through the gas passage via the three-dimensional circulation path including the flow in the width direction of the gas passage and the flow in the direction orthogonal to the width direction of the gas passage in combination. In addition, the thirteenth aspect of the present invention makes it possible to remarkably enhance the efficiency of heat transfer when the flow rate per unit time is large, compared with the prior art using fins.

The fourteenth aspect of the present invention makes it possible to provide the pressure reducing valve for LPG fuel which has an excellent efficiency of heat transfer, because the LPG fuel heating device having the structure of any one of the first to thirteenth aspects is annexed to the pressure reducing valve for LPG fuel.

The fifteenth aspect of the present invention makes it possible to build the pressure reducing valve for LPG fuel, to which the heating device is annexed, in a compact size, because the body configured to house the valve mechanism is formed as part of the passage forming body.

### BRIEF DESCRIPTION OF DRAWINGS

[FIG. 1] FIG. 1 is a longitudinal sectional view of a pressure reducing valve for LPG fuel of Embodiment 1. (First Embodiment)
[FIG. 2] FIG. 2 is a longitudinal sectional view of the pressure reducing valve for LPG fuel whose cutting plane is different from that of FIG. 1. (First Embodiment)
[FIG. 3] FIG. 3 is a perspective view of the pressure reducing valve for LPG fuel. (First Embodiment)
[FIG. 4] FIG. 4 is an enlarged view of a part which is indicated with an arrow 4 in FIG. 1. (First Embodiment)
[FIG. 5] FIG. 5 is a perspective view of a PTC heater unit. (First Embodiment)
[FIG. 6] FIG. 6 is perspective views sequentially showing a process of attaching a PTC holding member and PTC elements to an inner case. (First Embodiment)
[FIG. 7] FIG. 7 is diagrams sequentially showing a process of assembling an electrification part-side aggregate. (First Embodiment)
[FIG. 8] FIG. 8 is an enlarged view of a part which is indicated with an arrow 8 in FIG. 1. (First Embodiment)
[FIG. 9] FIG. 9 is an enlarged sectional view taken along a line 9-9 in FIG. 2. (First Embodiment)
[FIG. 10] FIG. 10 is a perspective view of a state in which a gas passage cover member is detached from a body. (First Embodiment)
[FIG. 11] FIG. 11 is a perspective view of a state in which a heated fluid passage cover member is detached from the body. (First Embodiment)
[FIG. 12] FIG. 12 is a perspective view schematically showing how multiple passage chambers are disposed and communicate with one another in a low-pressure gas passage. (First Embodiment)
[FIG. 13] FIG. 13 is a plan view schematically showing how the multiple passage chambers are disposed and communicate with one another in the low-pressure gas passage. (First Embodiment)
[FIG. 14] FIG. 14 is a perspective view of Embodiment 2 which corresponds to FIG. 12. (Second Embodiment)

### EXPLANATION OF REFERENCE NUMERALS AND SYMBOLS

- 17 ...: body
- 18 ...: gas passage cover member serving as a gas passage wall
- 19 ...: heated fluid passage cover member
- 21 ...: valve housing serving as a passage forming body
- 92 ...: gas passage groove
- 92a ...: bottom wall of the gas passage groove serving as a gas passage wall
- 93 ...: low-pressure gas passage serving as a gas passage
- 110 ...: heated fluid passage
- 111 ...: heated fluid passage groove
- 124 ...: normal circulation direction
- 125, 135 ...: passage-longitudinal-direction protruding wall
- 126, 136 ...: passage-width-direction protruding wall
- 127, 137 ...: passage chamber
- 128 ...: first communicating passage
- 129 ...: second communicating passage
- 130 ...: cutout
- 131 ...: minute clearance
- 138 ...: communicating passage
- PE ...: end point
- PS ...: starting point

### MODES FOR CARRYING OUT THE INVENTION

Referring to the attached drawings, descriptions will be hereinbelow provided for embodiments of the present invention.

### EMBODIMENT 1

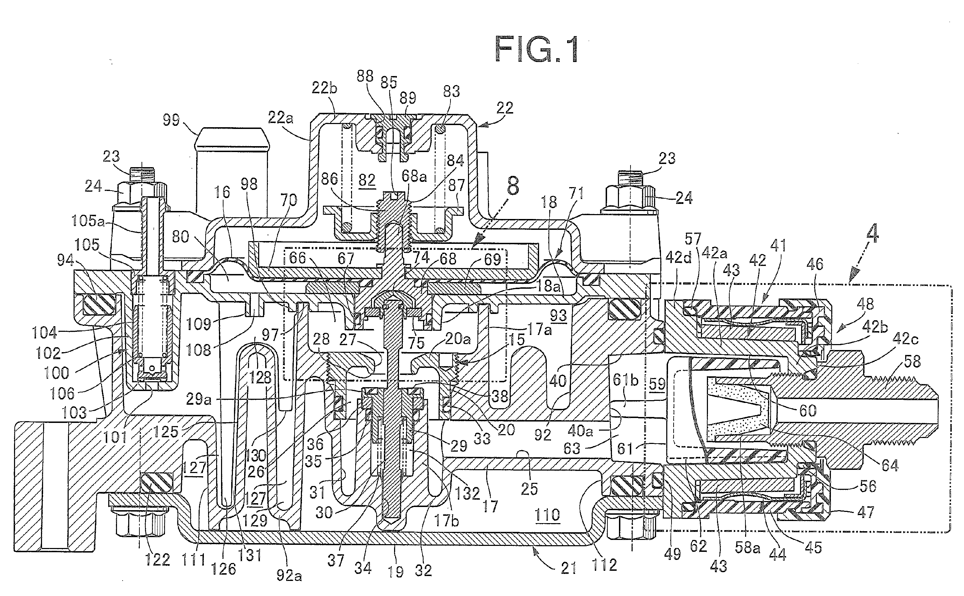

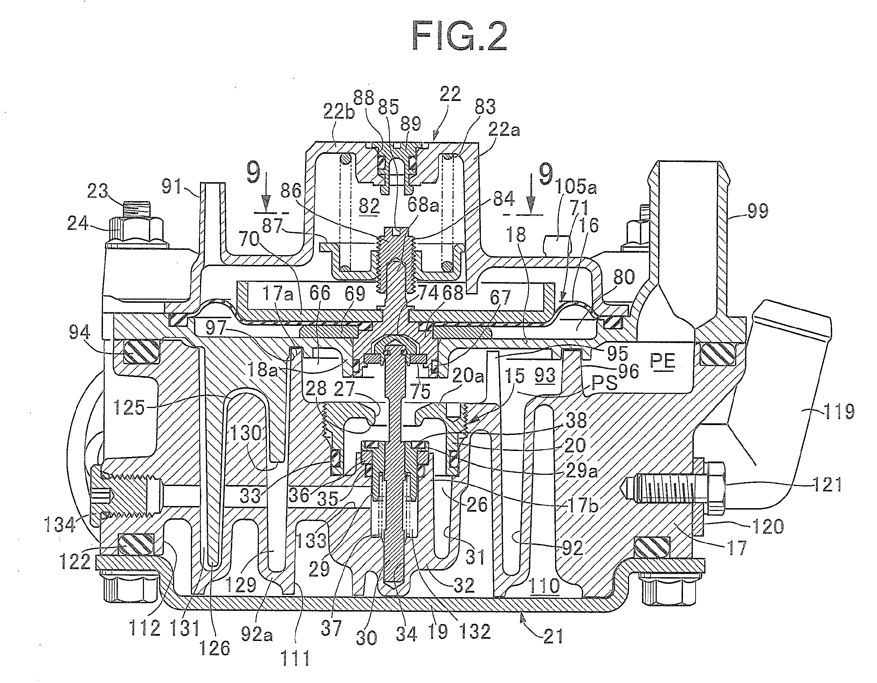

Referring to FIG. 1 to FIG. 13, descriptions will be provided for Embodiment 1 of the present invention. To begin with, in FIG. 1 and FIG. 2, this pressure reducing valve for LPG fuel is configured to reduce the pressure of LPG fuel and supply the LPG fuel to an engine (not illustrated), and includes a valve mechanism 15 and a diaphragm 16 configured to drive the valve mechanism 15 to open and close.

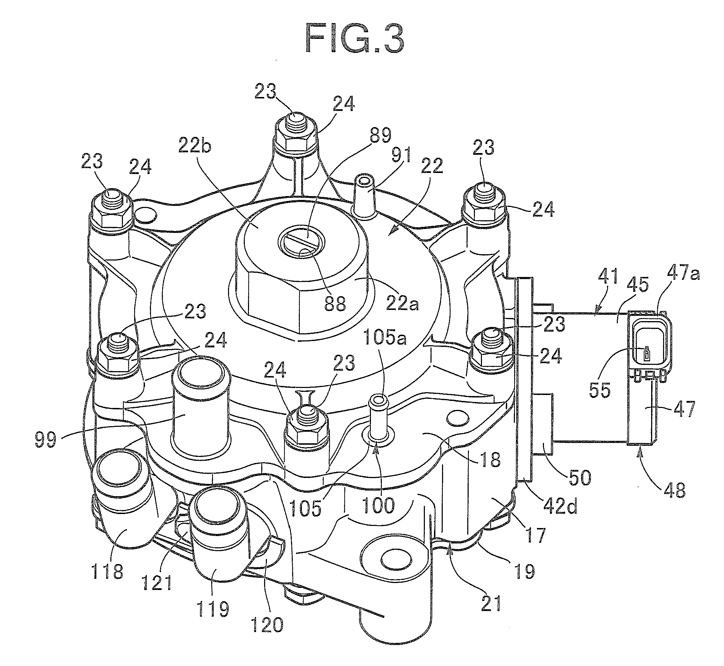

Referring to FIG. 3 together, a valve housing 21 of the valve mechanism 15 includes: a body 17; a gas passage cover member 18 fastened to one surface of the body 17; a heated fluid passage cover member 19 fastened to the opposite surface of the body 17; and a valve seat member 20 (see FIG. 1 and FIG. 2) screwed to the body 17. A diaphragm cover 22 holding a peripheral edge portion of the diaphragm 16 between the diaphragm cover 22 and the gas passage cover member 18, the body 17, the gas passage cover member 18, and the heated fluid passage cover member 19 are fastened together by use of multiple bolts 23, ... and multiple nuts 24, ....

The valve mechanism 15 is housed in the body 17. The valve mechanism 15 includes: a valve body 29 capable of being seated on a valve seat 28 which faces a valve chamber 26 communicating with a high-pressure gas passage 25, and which has a valve hole 27 opened in its center portion; and a valve stem 30 which is connected to the diaphragm 16 configured to work in response to a gas pressure downstream of the valve seat 28, and which continues to the valve body 29.

The body 17 is provided with a cylinder part 17a which is disposed in the center portion of the body 17. The cylinder part 17a is provided with a closed-end attachment hole 31 whose one end is opened to one surface side of the body 17, and whose opposite end is closed by an end wall 32, in a stepped shape whose diameter becomes smaller toward the end wall 32 in a stepwise manner.

The valve seat member 20 has a collar part 20a, which juts out inward in a radial direction, in its one end. The valve seat member 20 is shaped like a cylinder. The ring-shaped valve seat 28, having the valve hole 27 opened in its center portion, is formed in the center portion of the collar part 20a. This valve seat member 20 is inserted in and fixed to a middle portion of the attachment hole 31 in an axial direction by being screwed to the body 17. A ring-shaped first seal member 33, which is elastically in contact with the inner surface of the middle portion of the attachment hole 31 in the axial direction, is attached to the outer periphery of the valve seat member 20.

A central cylinder part 17b, which is disposed in the center portion inside the cylinder part 17a with its one end situated in a location corresponding to the middle portion of the valve seat member 20 in the axial direction, is provided with its opposite end integrally continuing to the end wall 32 closing the opposite end of the attachment hole 31. A closed-end guide hole 34 whose diameter is smaller than the inner diameter of the central cylinder part 17b is provided in the end wall 32 in such a way as to coaxially continue to the central cylinder part 17b.

The valve body 29 having a collar part 29a, which extends outward in the radial direction, in its one end is slidably fitted into the central cylinder part 17b. A ring-shaped second seal member 35 slidably in contact with the outer periphery of the valve body 29 is attached to a portion of the inner wall of the central cylinder part 17b, which is closer to one end. A ring-shaped retainer 36 configured to block the second seal member 35 from coming off the central cylinder part 17b is fitted into and fixed to the opening end of the central cylinder part 17b. The contact of the collar part 29a with the retainer 36 restrains a movement end toward the coming off of the valve 29 from the valve seat 28.

In the meantime, the valve body 29 is driven in the axial direction by the diaphragm 16. For the purpose of enhancing the valve body 29's capability to follow the movement of the diaphragm 16, a coil-shaped spring 37 configured to bias the valve 29 in the same direction as the collar part 29a is made closer to the valve seat 28 is compressedly provided between the end wall 32 and the valve body 29 within the central cylinder part 17b. A set load of this spring 37 is set at a very small value which is only enough for the valve body 29 to follow the diaphragm 16. In addition, a ring-shaped third seal member 38 capable of being seated on the valve seat 28 is attached to the collar 29a.

A middle portion of the valve stem 30 coaxially penetrating the valve body 29 is connected to the valve body 29. One end of this valve stem 30 loosely penetrates the valve hole 27, and is connected to the diaphragm 16. The opposite end portion of the valve stem 30 is slidably fitted into the guide hole 34.

Thereby, the valve chamber 26 is formed around the central cylinder part 17b between the valve seat member 20, which is hermetically inserted in and fixed to the middle portion of the cylinder part 17a, and the end wall 32. On the other hand, the body 17 is provided with: an inlet-side connection hole 40 which is opened to a side surface of the body 17; and the high-pressure gas passage 25 whose one end is opened to the inner end of the inlet-side connection hole 40, and whose opposite end communicates with the valve chamber 26.

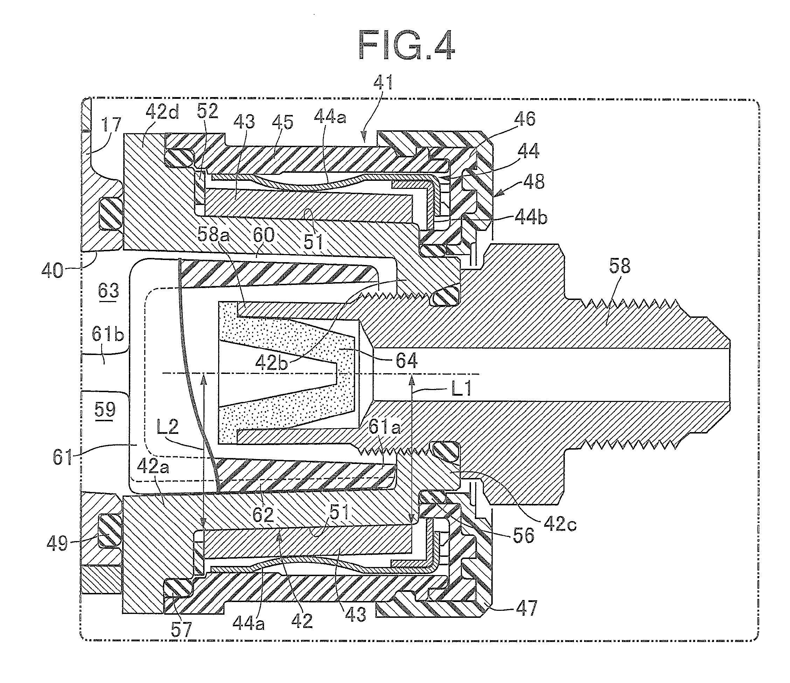

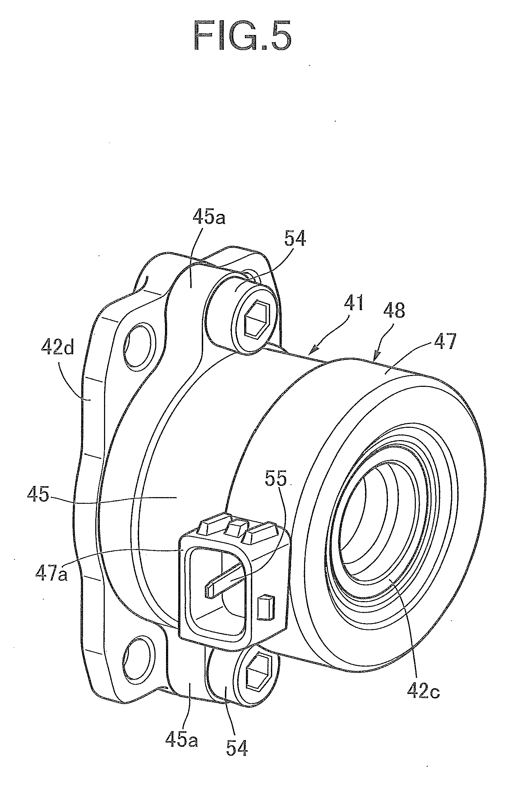

Referring to FIG. 4 and FIG. 5 together, a PTC heater unit 41 is annexed to the side surface of the body 17 in a location corresponding to the inlet-side connection hole 40.

The PTC heater unit 41 includes: a metal-made inner case 42 connected to the side surface of the body 17; multiple, for example, six PTC elements 43, 43, ... disposed on the outer periphery of the inner case 42; and an electrification part-side aggregate 48 which has an electrification member 44 and a tubular-shaped outer case 45, and which covers the inner case 42 with the PTC elements 43, 43, ... interposed between the electrification part-side aggregate 48 and the inner case 42.

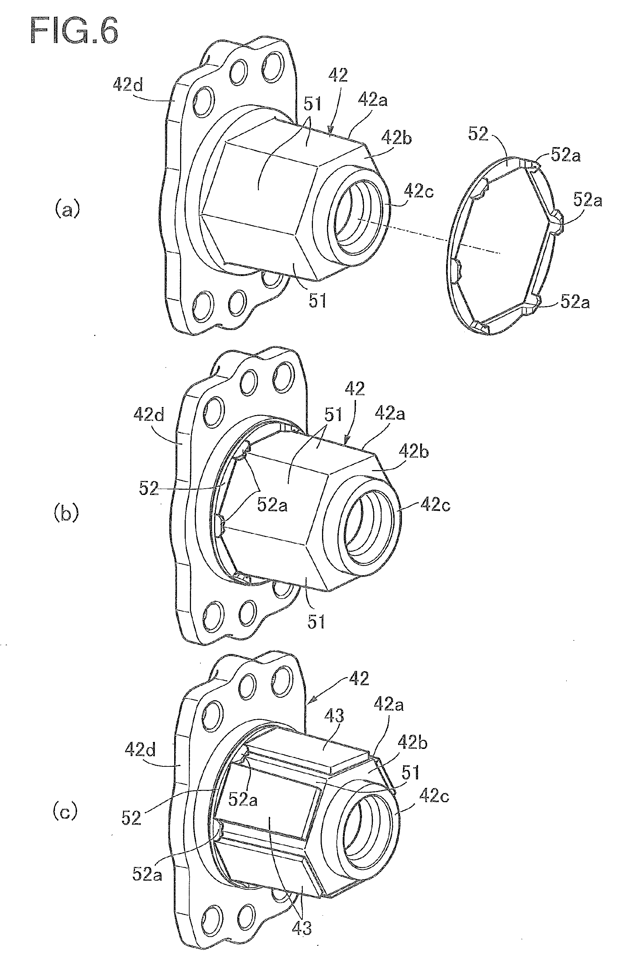

Referring to FIG. 6 together, the inner case 42 integrally includes: a base tube part 42a having an inner peripheral surface continuing to and flush with the inner periphery of the inlet-side connection hole 40 of the body 17; an inward-directed collar part 42b extending inward from an end of the base tube part 42a in the radial direction; a connection tube part 42c continuing to the inner periphery of the inward-directed collar part 42b, and projecting outward in the axial direction; and a flange part 42d extending outward in the radial direction from the opposite end of the base tube part 42a. The flange part 42d is fastened to the body 17 with multiple bolts 50, ... with a ring-shaped fourth seal member 49 interposed between the flange part 42d and the side surface of the body 17. The base tube part 42a is detachably directly connected to the body 17.

The outer peripheral surface of the base tube part 42a forms a polygon, for example, a hexagon while respectively forming multiple, for example, six flat supporting surfaces 51, 51, ... configured to be in contact with and support the PTC elements 43, 43, ..., which are shaped like a flat plate. The multiple PTC elements 43, 43, ... disposed in the outer peripheral surface of the base tube part 42a are disposed in a way that the multiple PTC elements 43, 43, ... form the polygonal shape when viewed in a direction along the axis of the base tube part 42a.

In addition, each of the supporting surfaces 51, 51, .. is formed as an inclined surface which inclines so as to be closer to the center of the base tube part 42a toward the one end of the base tube part 42a in the axial direction. In other words, as shown in FIG. 4, a distance L1 from a portion of each supporting surface 51 at the one end side of the base tube part 42a in the axial direction to the center axis of the base tube part 42a is set smaller than a distance L2 from a portion of the supporting surface 51 at the opposite end side of the base tube part 42a in the axial direction to the center axis of the base tube part 42a (L1<L2).

As shown in FIGS. 6(a), (b) and (c), a synthetic-resin-made ring-shaped PTC holding member 52 is in contact with the flange part 42d from the one end side of the base tube part 42a in the axial direction. As shown in FIG. 6(c), the end portions of the PTC elements 43, 43, ..., which are situated closer to the flange part 42d, are in contact with the PTC holding member 52, the PTC elements 43, 43, ... being disposed on the supporting surfaces 51, 51, ... which are the outer peripheral surface of the base tube part 42a.

Furthermore, the portions of the outer peripheral surface of the base tube part 42a, on which the respective PTC elements 43, 43, ... are disposed, and the inner periphery of the PTC holding member 52 form the polygonal shape, for example, the hexagonal shape in way that makes the portions of the outer peripheral surface of the base tube part 42a correspond to the inner periphery of the PTC holding member 52. Multiple protrusions 52a, 52a, ..., which are disposed in locations corresponding to corner portions of the polygon, and which project in a direction opposite from the flange portion 42d, are projectingly provided to the PTC holding member 52. Each of the protrusions 52a, 52a ... is disposed between each neighboring two of the multiple PTC elements 43, 43, ... disposed on the outer peripheral surface of the base tube part 42a.

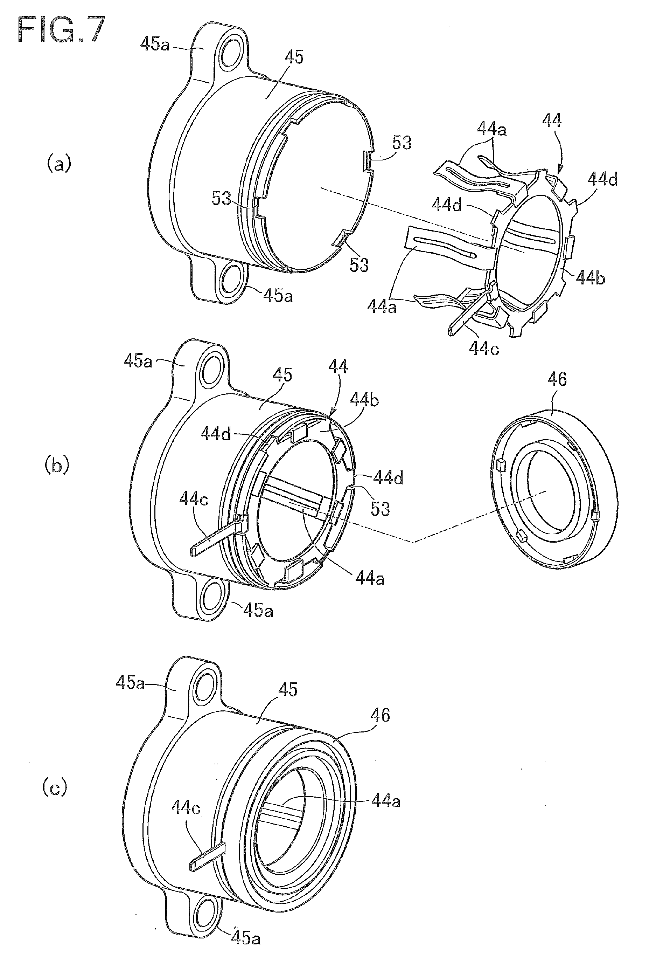

As shown in FIG. 7(a), the electrification member 44 includes: multiple electrode parts 44a, 44a, ... respectively and elastically in contact with the multiple PTC elements 43, 43, ... which are disposed on the outer peripheral surface of the base tube part 42a; a ring-shaped aggregate part 44b connected commonly to the electrode parts 44a, 44a, ...; and a terminal part 44c whose one end is connected to the aggregate part 44b. Positioning protrusions 44d, 44d, ..., which project sideward to the outside, are projectingly provided to the aggregate part 44b in a way that one positioning protrusion 44d is situated in the center portion between each two neighboring electrode parts 44a, 44a.

Moreover, the outer case 45, which is made of synthetic resin, is formed of a tubular shape in a way that makes the multiple electrode parts 44a, 44a, ... supported by the inner peripheral surface of the outer case 45. Multiple positioning cutouts 53, 53, ..., into which the positioning protrusions 44d, 44d, ... are fitted, are provided to one end of the outer case 45 in order to determine the position of the electrification member 44 in the peripheral direction. Paired attachment protrusions 45a, 45a extending sideward from two places in the opposite end of the outer case 45, which are situated at equal intervals in the peripheral direction, are attached to the flange part 42d of the inner case 42 with bolts 54, 54, respectively.

In the meantime, once the one end side of the outer case 45 is covered with a mold part 47 made of synthetic resin while the electrification part 44 is disposed with the aggregate part 44b, which continues commonly to the multiple electrode parts 44a, 44a, ... disposed inside of the outer case 45, being disposed in the one end side of the outer case 45 in the axial direction, and with a part of the terminal part 44c being situated outside of the outer case 45, the electrification part-side aggregate 48 including at least the electrification member 44, the outer case 45 and the mold part 47 is made.

As shown in FIGS. 7(b) and(c), an electrification member holding ring 46 with the aggregate part 44b of the electrification member 44 interposed between the electrification member holding ring 46 and the one end of the outer case 45 is fitted to the one end portion of the outer case 45 in the axial direction. The mold part 47 is formed, covering the electrification member holding ring 46. In other words, the electrification part-side aggregate 48 includes the electrification member 44, the outer case 45, the electrification member holding ring 46 and the mold part 47. In addition, a connector part 47a in which a part of the terminal part 44c is disposed as a connector terminal 55 is integrally formed in the mold part 47.

The base tube part 42a of the inner case 42, on whose outer peripheral surfaces the PTC elements 43, 43, ... are disposed, is fitted into the electrification part-side aggregate 48 from one end side of the electrification part-side aggregate 48 in the axial direction. Fifth and sixth seal members 56, 57, which are shaped like a ring, are set between the outer peripheral portions of the two ends of the inner case 42 and the two ends of the electrification part-side aggregate 48.

A conduit member 58 configured to guide LPG fuel is hermetically attached to a connection case in one end of the inner case 42, coaxially with the base tube part 42a, for example, by being screwed into the connection case. Gap passages 60, ... constituting at least a part of a heating gas passage 59, which connects the conduit member 58 and the high-pressure gas passage 25 together, are formed between the inner peripheral surface of the base tube part 42a and the outer peripheral surface of an insertion tube 61 which is inserted in the base tube part 42a.

The insertion tube 61 is shaped like a closed-end cylinder, whose one end is opened, and whose opposite end is closed. The insertion tube 61 is inserted in the base tube part 42a with its one end, which is opposite from the body 17, being opened. In addition, the two ends of the insertion tube 61 are projectingly provided, respectively, with protrusions 61a, ..., 61b configured to determine the position in the axial direction of the insertion tube 61 inside of the base tube part 42a. The protrusions 61a, ... on one side are projectingly provided, respectively, in multiple locations in one end of the insertion tube 61 while in contact with the inward-directed collar part 42b of the inner case 42, and the protrusion 61b on the opposite side is projectingly provided to the opposite end of the insertion tube 61 while in contact with an end wall 40a formed in the body 17 in such a way as to form an inner end of the inlet-side connection hole 40.

Furthermore, one of the inner peripheral surface of the base tube part 42a and the outer peripheral surface of the insertion tube 61, in this embodiment, the outer peripheral surface of the insertion tube 61 is projectingly provided with multiple ribs 62, ... whose respective tip ends are in contact with the other of the inner peripheral surface of the base tube part 42a and the outer peripheral surface of the inner tube, in this embodiment, the inner peripheral surface of the base tube part 42a, at intervals in the peripheral direction. Each of the gap passages 60 ... is formed between each corresponding neighboring two of the ribs 62, ... .

Moreover, the inner peripheral surface of the base tube part 42a and the outer peripheral surface of the insertion tube 61 are formed in a taper shape with the diameters becoming smaller toward one side in the axial direction. The insertion tube 61 is inserted in the base tube part 42a from one end side of the base tube part 42a in the axial direction.

A passage part 63 communicating with the high-pressure gas passage 25 of the body 17 is formed between the body 17 and the insertion tube 61 in such a way as to become part of the heating gas passage 59. This makes the gap passages 60, ... continue to the high-pressure gas passage 25 via the passage part 63.

In the meantime, the conduit member 58 integrally includes an entry conduit part 58a whose outer diameter is smaller than the inner diameter of the insertion tube 61, and which is coaxially inserted in the insertion tube 61. A metal-made filter 64 is fitted to and fixed to an inner end portion of this entry conduit part 58a, for example, in a way that makes the outer peripheral portion of the filter 64 press-fitted in the inner periphery of the inner end portion of the entry conduit part 58a.

Referring to FIG. 1 and FIG. 2 again, the gas passage cover member 18 is fastened to an outer peripheral portion of the body 17 in a way that makes one end portion of the cylinder part 17a of the body 17 fitted in the gas passage cover member 18. A pressure reducing chamber 66 continuing to the valve hole 27 is formed between the body 17 and the gas passage cover member 18 inside of the cylinder part 17a. In addition, a guide tube part 18a extending toward the pressure reducing chamber 66 is integrally provided to the center portion of the gas passage cover member 18 while coaxial with the valve hole 27.

A diaphragm rod 68 connected to the center portion of the diaphragm 16 is slidably fitted in the guide tube part 18a. A ring-shaped 7th seal member 67, which is slidably in contact with the inner periphery of the guide tube part 18a, is attached to the outer periphery of the diaphragm rod 68. An end of the valve stem 30 is connected with the diaphragm rod 68.

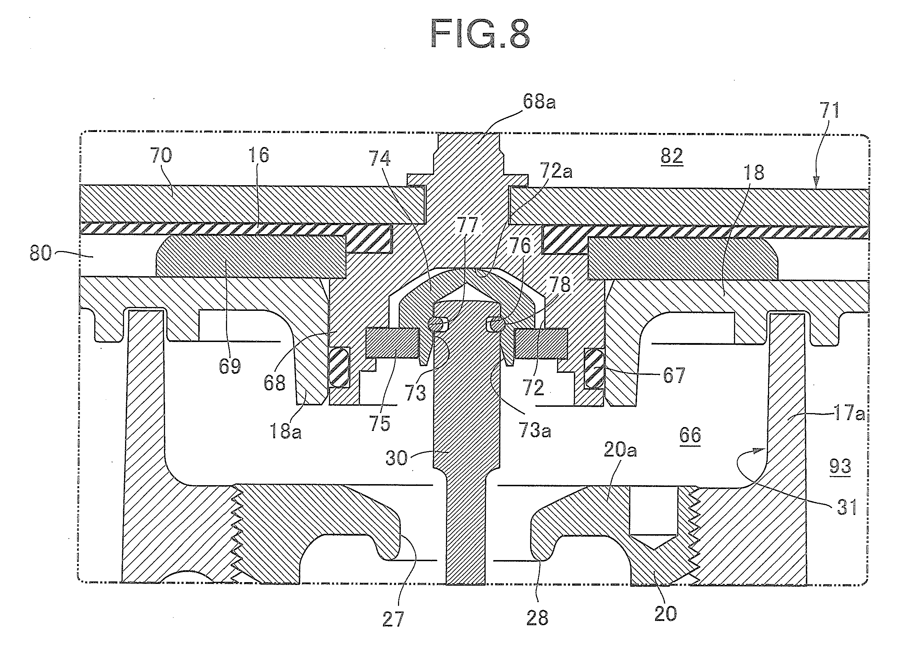

Referring to FIG. 8 together, the diaphragm rod 68 is designed to interpose a first retainer 69, which is a separate body independent of the diaphragm rod 68, between the diaphragm rod 68 and the center portion of one surface of the diaphragm 16. When a shaft part 68a, which is coaxially provided to the diaphragm rod 68, is made to engage with a second retainer 70 by crimping the shaft part 68a penetrating the diaphragm 16 and the second retainer 70 which is in contact with the center portion of the opposite surface of the diaphragm 16, the diaphragm rod 68 is connected to the center portion of the diaphragm 16 in a way that makes the first and second retainers 69, 70 interposed between the diaphragm rod 68 and the center portion of the diaphragm 16. Thereby, a diaphragm aggregate 71, which includes at least the diaphragm 16, the first retainer 69, the second retainer 70 and the diaphragm rod 68, is beforehand assembled before the valve stem 30 is connected to the diaphragm rod 68.

An insertion recess part 72 having an end wall 72a, which faces the valve mechanism 15, in its closed-end is coaxially provided to the diaphragm rod 68 in such a way as to be opened to the valve mechanism 15. A cap member 74 having a closed-end connection recess part 73, whose outer periphery is larger in diameter than that of one end portion of the valve stem 30, and which is opened to the valve mechanism 15, is loosely fitted in the insertion recess part 72. In addition, a ring-shaped holding plate 75, which is so endlessly continuous as to be shaped like a ring, is fixed to the inner periphery of the opening end of the insertion recess part 72 by crimping or press-fitting (in this embodiment, by crimping). The cap member 74 is held between the holding plate 75 and the end wall 72a of the insertion recess part 72.

Furthermore, ring-shaped engagement grooves 76, 77, which correspond to each other, are provided, respectively, to the outer periphery of the one end portion of valve stem 30, which is fitted in the connection recess part 73, and the inner periphery of the connection recess part 73. An engagement ring 78 capable of enlarging and contracting in the radial direction of the valve stem 30 is engaged with the two engagement grooves 76, 77.

Moreover, the connection of the valve stem 30 to the diaphragm rod 68 is achieved by connecting the valve stem 30 to the diaphragm rod 68 of the diaphragm aggregate 71 which is beforehand assembled. To this end, the cap member 74 is inserted into and fixed to the inside of the insertion recess part 72 of the diaphragm rod 68 with the holding plate 75, and thereafter the valve stem 30 is connected to the cap member 74 by use of the engagement ring 78. Besides, a guide surface 73a used to fit the end portion of the valve stem 30 into the connection recess part 73 is formed, in the opening end of the connection recess part 73, as a taper surface whose diameter becomes smaller inward.

In the meantime, a pressure working chamber 80 is formed between the gas passage cover member 18 and the one surface of the diaphragm 16. A spring chamber 82 is formed between the opposite surface of the diaphragm 16 and the diaphragm cover 22. The diaphragm 16 is biased by a coil-shaped diaphragm spring 83 in a direction in which the diaphragm 16 reduces the volume of the pressure working chamber 80. The spring load of the diaphragm spring 83 is adjustable.

An adjustment screw 86, in whose outer peripheral surface a male screw 84 is carved, and which is provided with an engagement recess part 85 in its end surface opposite from the diaphragm rod 68, is fitted to and supported by the shaft part 68a included in the diaphragm rod 68, which continues to the valve body 29 via the valve stem 30, and which is connected to the center portion of the diaphragm 16, in a way that makes the adjustment screw 86 capable of revolving about the axis inside of the spring chamber 82. The male screw 84 in the outer periphery of the adjustment screw 86 is screwed to the inner periphery of a spring reception member 87 which engages with the inner periphery of the diaphragm cover 22 in a way that makes the spring reception member 87 incapable of revolving about an axis coaxial with the rotary axis of the adjustment screw 86, and which is housed in the spring chamber 82 in a way that makes the spring reception member 87 capable of moving in the axial direction.

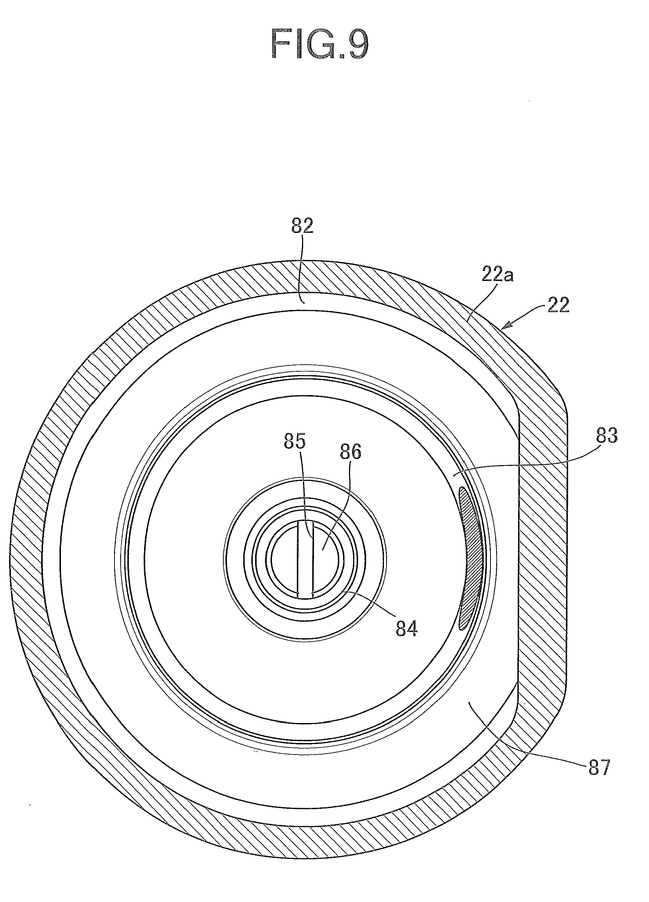

The diaphragm cover 22 has a tube part 22a whose cross-sectional shape is non-circular as shown in FIG. 9, and its end is closed by an end wall 22b. The diaphragm cover 22 is shaped like a hat. The spring reception member 87 is engaged with the inner periphery of the tube part 22a in such a way as to be capable of moving in a direction along the axis of the tube part 22a, but incapable of revolving about the axis.

The diaphragm spring 83, which is a coil spring, is compressedly installed between the spring reception member 87 and the end wall 22b of the diaphragm cover 22. A tool insertion hole 88 is provided to the end wall 22b of the diaphragm cover 22 at a location opposed to an end surface to which the engagement recess part 85 of the adjustment screw 86 is provided. A cap 89 configured to close the tool insertion hole 88 is attached to the end wall 22b of the diaphragm cover 22.

A negative pressure introducing pipe 91 continuing to the inside of the spring chamber 82 is provided to the diaphragm cover 22. A conduit (not illustrated) configured to guide a manifold air pressure from the engine is connected to the negative pressure introducing pipe 91.

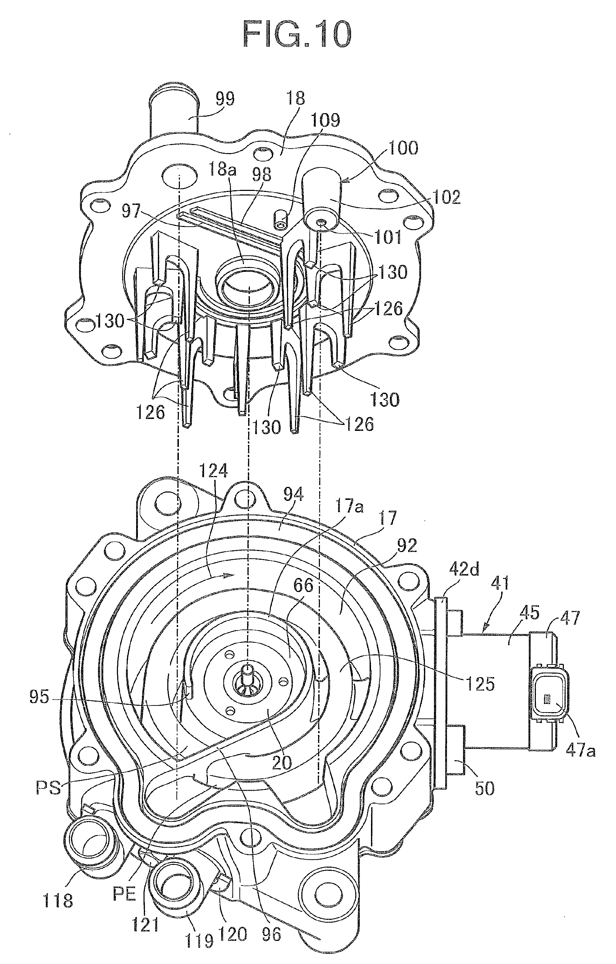

Referring to FIG. 10 together, the body 17 is provided with a circular gas passage groove 92, which surrounds the cylinder part 17a integrally provided to the body 17, in a way that makes the one surface of the body 17 opened. A low-pressure gas passage 93 is formed from: the gas passage cover member 18 attached to the one surface of the body 17 in a way that makes the gas passage cover member 18 cover the gas passage groove 92; and the gas passage groove 92. A ring-shaped 8th seal member 94 is set between the body 17 and the gas passage cover member 18 outside of the low-pressure gas passage 93.

In addition, an opening part 95 making the pressure reducing chamber 66, which is formed in the cylinder part 17a, communicate with the low-pressure gas passage 93 is formed in one portion of the cylinder part 17a in the peripheral direction in a way that makes the portion of the cylinder part 17a cutout. An extended wall part 96, whose one end portion continues to the cylinder part 17a at one side of the opening part 95, and which extends in a direction tangent to the cylinder part 17a, is integrally provided to the body 17 in a way that makes the opposite end portion of the extended wall part 96 connected to the outer peripheral portion of the body 17. On the other hand, a protrusion 98 forming a fitting groove 97, in which one end of the cylinder part 17a and one end of the extended wall part 96 are fitted, is projectingly provided to the gas passage cover member 18 in such a way as to have a shape corresponding to the shapes, respectively, of the cylinder part 17a and the extended wall part 96 which continue to each other.

The LPG fuel, which flows out to the low-pressure gas passage 93 from the pressure reducing chamber 66, circulates through the inside of the low-pressure gas passage 93 in such a way as to make almost a circuit around the cylinder part 17a. A starting point PS of the low-pressure gas passage 93 is set at one side of the extended wall part 96 which is a side at which the opening part 95 is placed, while an end point PE of the low-pressure gas passage 93 is set at the opposite side of the extended wall part 96.

Furthermore, the gas passage cover member 18 is provided with a gas outlet pipe 99 which continues to the end point PE of the low-pressure gas passage 93. The gas passage cover member 18 is further provided with a relief valve 100 which is made to enter the low-pressure gas passage 93 in the vicinity of the end point PE. This relief valve 100 includes a valve housing 102, a valve body 104, a lid member 105 and a spring 106. The valve housing 102 has a valve hole 101, which continues to the inside of the low-pressure gas passage 93, in its front-end closed portion. The valve housing 102 is shaped like a closed-end cylinder. The valve housing 102 is integrally provided to the gas passage cover member 18 in such a way as to enter the low-pressure gas passage 93. The valve body 104 has a seal part 103, which is capable of closing the valve hole 101, in its tip end. The valve body 104 is slidably fitted in the valve housing 102. The lid member 105 has a connection pipe part 105a in conformity. The lid member 105 is fitted in and fixed to the opening end of the valve housing 102 by press-fitting or the like. The spring 106 is compressedly installed between the lid member 105 and the valve body 104. The valve body 104 is formed in a way that enables the LPG fuel, which is discharged through the valve hole 101, to circulate to the connection pipe part 105a side while the valve hole 101 is being opened.

Moreover, the gas passage cover member 18 is integrally provided with a tube part 109, for example, in a way that makes the tube part 109 continue to the lower-pressure gas passage 93 in the vicinity of the end point PE. The tube part 109 enters the low-pressure gas passage 93 in such a way as to form a communication passage 108 making the pressure in the low-pressure gas passage 93 work on the pressure working chamber 80 which the one surface of the diaphragm 16 faces.

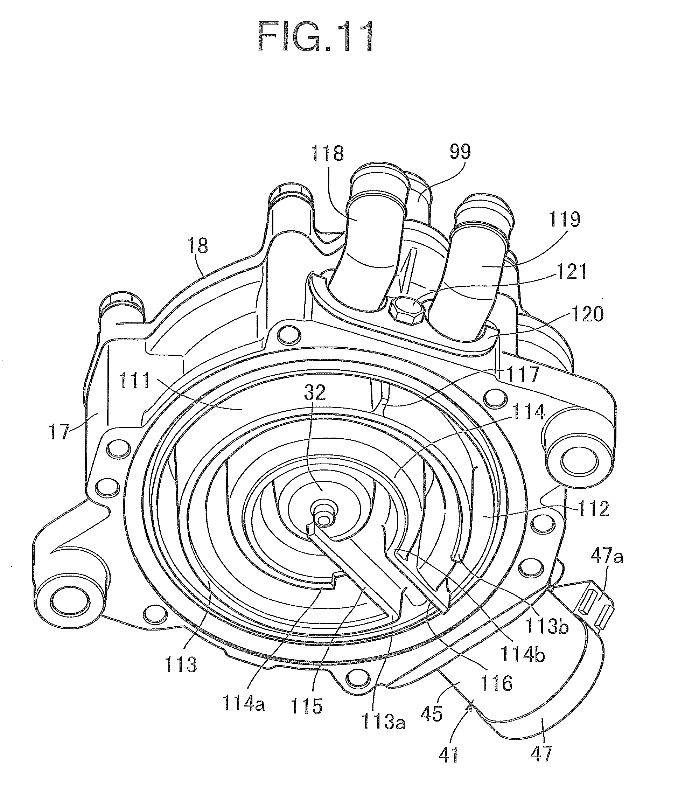

Referring to FIG. 11 together, a heated fluid passage 110, through which engine cooling water as a heat source circulates, is formed in the valve housing 21 outside of the low-pressure gas passage 93. A heated fluid passage groove 111 is provided to the opposite surface of the body 17 which is opposite from the low-pressure gas passage 93. The heated fluid passage 110 is formed from: the heated fluid passage cover member 19 which covers the heated fluid passage groove 111, and which is attached to the opposite surface of the body 17; and the heated fluid passage groove 111.

A recess part 112, whose diameter is larger than that of the gas passage groove 92, is provided to the opposite surface of the body 17. The body 17 is integrally provided with: an outer arc wall 113, which is shaped like an arc in a location substantially corresponding to the outer periphery of the gas passage groove 92, and which is disposed inside of the recess part 112; and an inner arc wall 114, which is shaped like an arc in a location substantially corresponding to the inner periphery of the gas passage groove 92, and which is disposed inside of the recess part 112. One end 114a of the inner arc wall 114 is placed in a location deviating from one end 113a of the outer arc wall 113 in one of the peripheral directions, while the opposite end 114b of the inner arc wall 114 is placed in a location deviating from the opposite end 113b of the outer arc wall 113 in the one of the peripheral directions.

An outer end of a first radial wall 115, which extends in the radial direction of the recess part 112 in a way that makes the first radial wall 115 situated in a location on the other side in the peripheral direction of the one end 114a of the inner arc wall 114, is continuously provided to the one end 113a of the outer arc wall 113 at a right angle. The inner end of the first radial wall 115 is continuously provided to the end wall 32 which closes the opposite end of the attachment hole 31. In addition, an inner end of a second radial wall 116, which extends in parallel with the first radial wall 115 in a way that makes the second radial wall 116 situated in a location on one side in the peripheral direction of the opposite end 113b of the outer arc wall 113, is continuously provided to the opposite end 114b of the inner arc wall 114 at a right angle. The outer end of the second radial wall 116 is continuously provided to the body 17 in the outer periphery of the recess part 112 at a right angle. Furthermore, a partition wall 117, which connects the outer periphery of a middle portion of the outer arc wall 113 to the outer periphery of the recess part 112 at a right angle, is provided to the body 17.

Thereby, the heated fluid passage groove 111 is formed from: the recess part 112, the outer arc wall 113, the inner arc wall 114, the first radial wall 115, the second radial wall 116 and the partition wall 117. The heated fluid passage 110 formed between the heated fluid passage groove 111 and the heated fluid passage cover member 19 includes: a passage portion through which the engine cooling water, which flows into the heated fluid passage 110 on one side of the partition wall 117, circulates to the second radial wall 116 along the outer periphery of the outer arc wall 113; a passage portion through which the engine cooling water circulates to the inside of the inner arc wall 114 while guided by the first and second radial walls 115, 116; a passage portion through which the engine cooling water circulates to the second radial wall 116 between the inner arc wall 114 and the outer arc wall 113; and a passage portion through which the engine cooling water circulates to the opposite side of the partition wall 117 along the outer periphery of the outer arc wall 113.

A cooling water inlet pipe 118 and a cooling water outlet pipe 119 are fluid-tightly fitted to a side portion of the body 17. The cooling water inlet pipe 118 continues to the heated fluid passage 110 at the one side of the partition wall 117 in such a way as to guide the engine cooling water into the heated fluid passage 110. The cooling water outlet pipe 119 continues to the heated fluid passage 110 at the opposite side of the partition wall 117 in such a way as to guide the engine cooling water out of the heated fluid passage 110. A fitting keeping plate 120 configured to commonly keep the cooling water inlet pipe 118 and the cooling water outlet pipe 119 fitted to the body 17 is fastened to the body 17 by use of a bolt 121. In addition, a ring-shaped 9th seal member 122 is set between the body 17 and the heated fluid passage cover member 19 outside of the heated fluid passage 110.

A single passage-longitudinal-direction protruding wall 125 and multiple passage-width-direction protruding walls 126, ... are provided to the valve housing 21 of the pressure reducing valve in such a way as to enter the low-pressure gas passage 93. The passage-longitudinal-direction protruding wall 125 extends in the shape of an arc in a normal circulation direction 124 of the LPG fuel from the starting point PS to the end point PE of the low-pressure gas passage 93. The passage-width-direction protruding walls 126, ... are orthogonal to the normal circulation direction 124 and extend in the width direction of the low-pressure gas passage 93.

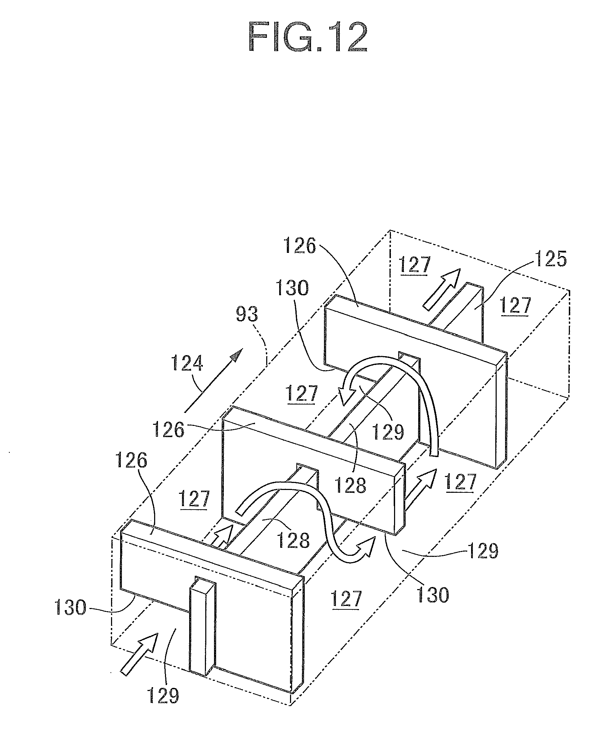

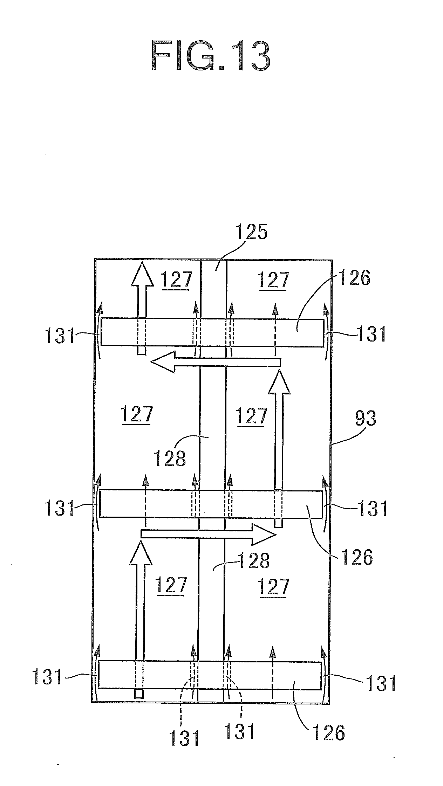

Referring to FIG. 12 and FIG. 13 together, in the low-pressure gas passage 93, multiple passage chambers 127, ..., multiple first communicating passages 128, ..., and multiple second communicating passages 129, ... are formed through cooperation among the body 17 and the gas passage cover member 18 of the valve housing 21 as well as the passage-longitudinal-direction protruding wall 125 and the passage-width-direction protruding walls 126, .... The first communicating passages 128, ..., and the second communicating passages 129, ... make mutually adjacent ones of the passage chambers 127, ... communicate with each other in a way that makes the LPG fuel sequentially circulate through the passage chambers 127, .... The first communicating passages 128, ... and the second communicating passages 129, ... are disposed in a way that makes the LPG fuel sequentially circulate through the multiple passage chambers 127, ... from the starting point PS to the end point PE of the low-pressure gas passage 93 while passing through the passage chambers 127, ... zigzaggedly.

Each of the first communicating passages 128, ... connects two corresponding passage chambers 127, 127 which are adjacent to each other with the passage-longitudinal-direction protruding wall 125 interposed in between. Each of the second communicating passages 129, ... connects two corresponding passage chambers 127, 127 which are adjacent to each other with one corresponding passage-width-direction protruding wall 126 interposed in between. The first communicating passages 128, ... and the second communicating passages 129, ... are disposed at the opposite side from each other in the protruding direction of the passage-longitudinal-direction protruding wall 125.

In the meantime, the low-pressure gas passage 93 is formed from: the gas passage groove 92 provided to the body 17; and the gas passage cover member 18 configured to cover the gas passage groove 92. The passage-longitudinal-direction protruding wall 125 and the passage-width-direction protruding walls 126, ... are each projectingly provided to either the bottom wall 92a of the gas passage groove 92 or the gas passage cover member 18. Further, one of the passage-longitudinal-direction protruding wall 125 and the passage-width-direction protruding walls 126, ... are projectingly provided to one of the bottom wall 92a of the gas passage groove 92 and the gas passage cover member 18, while the other of the passage-longitudinal-direction protruding wall 125 and the passage-width-direction protruding walls 126, ... are projectingly provided to the other of the bottom wall 92a of the gas passage groove 92 and the gas passage cover member 18.

In this embodiment, the bottom wall 92a of the gas passage groove 92, which is one of the bottom wall 92a of the gas passage groove 92 and the gas passage cover member 18, is projectingly provided with the passage-longitudinal-direction protruding wall 125, while the gas passage cover member 1, which is the other of the bottom wall 92a of the gas passage groove 92 and the gas passage cover member 19, is projectingly provided with the passage-width-direction protruding walls 126, ... which are formed in such a way as to straddle the passage-longitudinal-direction protruding wall 125.

The first communicating passages 128, ... are formed between the tip end of the passage-longitudinal-direction protruding wall 125 and the gas passage cover member 18. Cutouts 130, ... configured to form the second communicating passages 129, ... between the tip ends of the passage-width-direction protruding walls 126, ... and the bottom wall 92a of the gas passage groove 92 are provided to the tip ends of the passage-width-direction protruding walls 126, .... In other words, the passage-longitudinal-direction protruding wall 125 is projectingly provided to the bottom wall 92a of the gas passage groove 92 at the side where the second communicating passages 129, ... are disposed.

In the meantime, the length of each of the passage chambers 127, ... in the normal circulation direction 124 is set larger than the width of each of the passage chambers 127, ... in the width direction of the low-pressure gas passage 93. The heated fluid passage 110, through which the engine cooling water circulates, is disposed in a location which makes the heated fluid passage 110 interpose the bottom wall 92a between the heated fluid passage 110 and the low-pressure gas passage 93. In this respect, the bottom wall 92a is a gas passage wall which is closer to the second communicating passages 129, ... out of the gas passage cover member 18 and the bottom wall 92a of the gas passage groove 9 which are the paired gas passage walls facing the low-pressure gas passage 93 in the protruding direction of the passage-longitudinal-direction protruding wall 125.

In addition, the engine cooling water, which serves as the heat source, is guided to at least either the inside of the passage-longitudinal-direction protruding wall 125 or the insides of the respective passage-width-direction protruding walls 126, .... In this embodiment, a protruding wall projectingly provided to the body 17, that is to say, the passage-longitudinal-direction protruding wall 125 projectingly provided to the bottom wall 92a of the gas passage groove 92 is formed as the hollow one which is opened to the heated fluid passage 110 side in order to guide the engine cooling water into its inside.

Moreover, minute clearances 131, ... are formed between the passage-width-direction protruding walls 126, ..., which are projectingly provided to the gas passage cover member 18 as a gas passage wall forming one side surface of the low-pressure gas passage 93, and the passage-longitudinal-direction protruding wall 125, as well as between the passage-width-direction protruding walls 126, ... and the side surfaces of the low-pressure gas passage 93, except for the one side surface being the gas passage cover member 18.

As described above, the passage-longitudinal-direction protruding wall 125 and the passage-width-direction protruding walls 126, ... are made to enter the low-pressure gas passage 93, while the multiple passage chambers 127, ... as well as the first and second communicating passages 128, ..., 129, ..., which make the passage chambers 127, ... communicate with one another, are formed in the low-pressure gas passage 93 through cooperation among the body 17, the gas passage cover member 18, the passage-longitudinal-direction protruding wall 125 and the passage-width-direction protruding walls 126, .... For this reason, as indicated with white arrows in FIG. 12 and FIG. 13, the LPG fuel circulates through the inside of the low-pressure gas passage 93 zigzaggedly in a way that makes the LPG fuel pass through a three-dimensional circulation path including the flows in the width direction of the low-pressure gas passage 93 and the flows in a direction orthogonal to the width direction of the low-pressure gas passage 93 in combination.

In the meantime, in the valve mechanism 15, a back pressure chamber 132, which the back of the valve body 29 faces, is formed between the end wall 32 and the valve body 29 inside of the small-diameter cylinder part 17b of the body 17. A communicating hole 133 configured to make the back pressure chamber 132 communicate with the low-pressure gas passage 93 is provided to the body 17 in such a way as to penetrate the low-pressure gas passage 93. The outer-end opening portion of the communicating hole 133 is hermetically closed by a lid member 134. In addition, the communicating hole 133 penetrates the passage-longitudinal-direction protruding wall 125 as well. Basically, the passage-longitudinal-direction protruding wall 125 is formed as the one which is hollow in order to guide the engine cooling water into its inside. Nevertheless, a portion of the passage-longitudinal-direction protruding wall 125, in which the communicating hole 133 is formed, is formed solid.

Next, descriptions will be provided for operations of Embodiment 1. The PTC heater unit 41 configured to heat the LPG fuel, which circulates through the heating gas passage 59 between the high-pressure gas passage 25 provided to the body 17 and the conduit member 58 configured to guide the LPG fuel whose pressure is to be reduce is attached to a side surface of the body 17 which constitutes a part of the valve housing 21 included in the pressure reducing valve for LPG fuel. This PTC heater unit 41 can enhance the efficiency of heating the LPG fuel by: forming the gap passages 60, ..., which constitute at least parts of the heating gas passage 59, between the inner peripheral surface of the base tube part 42a, on whose outer peripheral surfaces the PTC elements 43 are placed, and the outer peripheral surface of the insertion tube 61 inserted in the base tube part 42a; using the inner peripheral surface of the base tube part 42a, which is the outer wall surfaces of the gap passages 60, ..., as the heat radiation surface; and making all of the LPG fuel, which circulates through the heating gas passage 59, circulate near the heat radiation surface.

In addition, the multiple plate-shaped PTC elements 43, ... are placed on the outer peripheral surface of the base tube part 42a in such a way as to form the polygon when viewed in a direction along the axis of the base tube part 42a. This makes it possible to place the multiple plate-shaped low-cost PTC elements 43, ... with the base tube part 42a covered with the PTC elements 43, ..., and accordingly to enhance the efficiency of heating the LPG fuel.

Furthermore, the multiple ribs 62, ..., whose respective tip ends are in contact with the inner peripheral surface of the base tube part 42a, are projectingly provided to the outer peripheral surface of the insertion tube 61 at intervals in the peripheral direction. The gap passages 60, ... are formed between the ribs 62, .... For these reason, the radial location of the insertion tube 61 can be easily positioned to the base tube part 42a while securely forming the gap passages 60, ... between the base tube part 42a and the insertion tube 61.

Moreover, the inner peripheral surface of the base tube part 42a and the outer peripheral surface of the insertion tube 61 are formed in the taper shape with the diameters of the base tube part 42a and the insertion tube 61 becoming smaller toward their one ends in their axial directions. Accordingly, the insertion tube 61 is inserted into the base tube part 42a from its one end side in its axial direction. This makes it easy to insert the insertion tube 61 into the base tube part 42a, and to position the insertion tube 61 inside of the base tube part 42a.

Besides, the base tube part 42a constitutes part of the inner case 42 which includes the flange part 42d fastened to the body 17, and is directly connected to the body 17 which forms the passage part 63 continuing to the gap passages 60, .... This makes it possible to attach the PTC heater unit 41 to the pressure reducing valve for LPG fuel in a compact manner.

Additionally, the protrusions 61a, 61b projectingly provided to the opposite ends of the insertion tube 61 in the axial direction are put in contact with the inward-directed collar part 42b provided to the base tube part 42a and the end wall 40a formed in the body 17, respectively, in such a way as to position the insertion tube 61 inside of the base tube part 42a in the axial direction. This makes it easy to position the insertion tube 61 in the axial direction.

Further, the insertion tube 61 is shaped like a closed-end cylinder with its one end in the axial direction being opened, and with its opposite end in the axial direction being closed; the entry conduit part 58a, which is integrally included in the conduit member 58 coaxially attached to the base tube part 42a, has the outer diameter smaller than the inner diameter of the insertion tube 61, and is inserted in the insertion tube 61; and the filter 64 is fitted in and fixed to the inner end portion of the entry conduit part 58a. These make it possible to place the filter 64, which is configured to filter the LPG fuel guided to the insides of the gap passages 60, ... while avoiding the PTC heater unit 41 becoming bulky in a direction along the axes of the base tube part 42a and the insertion tube 61. In addition, because the outer peripheral portion of the metal-made filter 64 is press-fitted in the inner periphery of the inner end portion of the entry conduit part 58a, it is possible for the filter 64 to be fitted in and fixed to the inner end portion of the entry conduit part 58a by use of the simple constitution.

In the meantime, the PTC heater unit 41 includes: the inner case 42 having the base tube part 42a; the multiple PTC elements ... placed on the outer peripheral surface of the base tube part 42a; the electrification member 44 having the multiple electrode parts 44a, ... which are respectively and elastically in contact with the PTC elements 43, ...; and the tubular-shaped outer case 45 configured to hold the multiple electrode parts 44a, ..., which interpose the PTC elements 43, ... between the electrode parts 44a, ... and the outer peripheral surface of the base tube part 42a, by use of its inner peripheral surface. The electrification member 44 includes: the multiple electrode parts 44a, ...; the ring-shaped aggregate part 44b to which the electrode parts 44a, ... are commonly connected; and the terminal part 44c whose one end is connected to the aggregate part 44b. Under the condition where the electrification member 44 is placed while the aggregate part 44b, which continues commonly to the multiple electrode parts 44a, ... placed inside of the outer case 45, is placed in the one end side of the outer case 45 in the axial direction, and while the part of the terminal part 44c is situated outside of the outer case 45, the one end side of the outer case 45 is covered with the mold part 47 made of the synthetic resin, and the inner case 42 with the PTC elements 43, ... placed on the outer peripheral surface of the base tube part 42a is fitted in the electrification part-side aggregate 48 including at least the electrification member 44, the outer case 45 and the mold part 47.

This makes unnecessary a member which would otherwise be used to hold the multiple PTC elements 43, ... and the multiple electrodes, which are respectively in contact with the PTC elements 43, ..., during their assembling. Accordingly, it is possible to reduce parts in number. When the electrification part-side aggregate 48 is formed beforehand, the assembling can be easily achieved in a reduced number of assembling steps.

In addition, the connector part 47a in which the part of the terminal part 44c is placed as the connector terminal 55 is integrally formed in the mold part 47. This makes it possible to form the connector part 47a with a higher productivity.

Furthermore, the ring-shaped 6th and 7th seal members 56, 57 are set between the outer peripheral portions of the two ends of the inner case 42 and the two ends of the electrification part-side aggregate 48. For this reason, the waterproofness of the connector part 47a makes it possible to prevent water and the like from entering the interstice between the inner case 42 and the electrification part-side aggregate 48 while a connector from the power supply is connected to the connector part 47a.

Moreover, the electrification member holding ring 46, which interposes the aggregate part 44b of the electrification member 44 between the electrification member holding ring 46 and one end portion of the outer case 45 in the axial direction, is fitted to the one end portion of the outer case 45. The mold part 47 is formed with the electrification member holding ring 46 covered with the mold part 47. For these reasons, the mold part 47 can be formed while holding the electrification member 44 onto the outer case 45 with the electrification member holding ring 46 fitted to the one end portion of the outer case 45. In addition, because the electrification member holding ring 46 blocks molten resin from entering the inside of the outer case 45 during the formation of the mold part 47, it is easy for the mold part 47 to be formed.

Besides, the portions of the outer peripheral surface of the base tube part 42a, on which the respective PTC elements 43, ... are placed, are formed as the inclined surfaces which become closer to the center axis of the base tube part 42a toward one end of the base tube part 42a in the axial direction. The base tube part 42a is fitted to the electrification part-side aggregate 48 from the one end in the axial direction. These make it possible to easily put the electrode parts 44a, ... into contact with the respective PTC elements 43, ... during the assembly of the PTC heater unit 41 in which the inner case 42 is fitted to the electrification part-side aggregate 48, and the assembly can be achieved easily.

Additionally, the flange part 42d extending outward from the base tube part 42a in the radial direction is integrally provided to the opposite end of the metal-made inner case 42 in the axial direction. The ring-shaped PTC holding member 52 made of synthetic resin is put in contact with the flange part 42d from the one end side of the base tube part 42a in the axial direction. The end parts of the respective PTC elements 43, ..., which are closer to the flange part 42d, are put in contact with the PTC holding member 52. These make it possible to cause the PTC holding member 52 to cut off the electric current, which would otherwise flow from the electrode parts 44a, ... to the flange part 42d side via the PTC elements 43, ... during the electrification, while causing the PTC holding member 52 to position the PTC elements 43, ... in the axial direction. Accordingly, it is possible to enhance the heat generating efficiency of the PTC elements 43, ....

In addition, the parts of the outer peripheral surface of the base tube part 42a, on which the PTC elements 43 are placed, and the inner periphery of the PTC holding member 52 correspond to each other, and form the polygon. The multiple protrusions 52a which are placed in the locations corresponding to the corners of the polygon, and which protrude in the direction opposite from the flange part 42d, are projectingly provided to the PTC holding member 52. The protrusions 52a are placed between the multiple PTC elements 43, ... which are placed on the outer peripheral surface of the base tube parts 42a. These enable the PTC holding member 52 to have a function of positioning the PTC elements 43, ... in the peripheral direction of the base tube part 42a, and make it possible to prevent the increase in the number of parts by making the one part have the multiple functions.

In the meantime, the valve stem 30 of the valve mechanism 15 is connected to the diaphragm rod 68 joined to the center portion of the diaphragm 16. The insertion recess part 72 having the end wall 72a, which faces the valve mechanism 15 side, in its closed end is coaxially provided to the diaphragm rod 68 in such a way as to be opened to the valve mechanism 15 side. The cap member 74, which has the outer periphery whose diameter is larger than that of the one end portion of the valve stem 30, which has the closed-end connection recess part 73 opened to the valve mechanism 15 side, and which is loosely fitted in the insertion recess part 72, is held between the ring-shaped holding plate 75, which is fixed to the inner periphery of the opening end of the insertion recess part 72 by crimping or press-fitting (in this embodiment, by crimping), and the end wall 72a. The engagement ring 78 capable of expanding and contracting in the radial direction of the valve stem 30 is engaged with the ring-shaped engagement grooves 76, 77 which are correspondingly provided to the outer periphery of the one end portion of the valve stem 30 fitted in the connection recess part 73 and the inner periphery of the connection recess part 73. These enable the cap member 74 to be connected to the diaphragm rod 68 with the simple structure using the easy-to-process diaphragm rod 68, cap member 74 and holding plate 75, whose production costs are low, while allowing the diaphragm 16 to tilt to the plane at a right angle to the direction of the valve stem, as well as while allowing the displacement of the axis of a diaphragm 16 side and the axis of the valve body 29 side.

Furthermore, the holding plate 75 endlessly continues, and is shaped like a ring. This makes it possible to make the structure for connecting the diaphragm rod 68 and the cap member 74 rigid.

Moreover, the connecting of the valve stem 30 to the diaphragm rod 68 is achieved as follows. The shaft part 68a penetrating the diaphragm 16 and the second retainer 70, which is in contact with the center portion of the opposite surface of the diaphragm 16, is coaxially provided to the diaphragm rod 68 which interposes the first retainer 69, which is a separate body independent of the diaphragm rod 68, between the diaphragm rod 68 and the center portion of the one surface of the diaphragm 16. Then, the diaphragm aggregate 71 including at least the diaphragm 16, the first retainer 69, the second retainer 70 and the diaphragm rod 68 is assembled in advance by engaging the shaft part 68a to the second retainer 70 by crimping. Finally, the one end portion of the valve stem 30 is connected to the diaphragm rod 68 of the diaphragm aggregate 71 by use of the cap member 74, the holding plate 75 and the engagement ring 78. For this reason, once the diaphragm aggregates 71 are assembled by crimping in large numbers in advance before manufacturing the pressure reducing valves, each pressure reducing valve can be easily assembled while allowing the diaphragm 16 to tilt to the plane at a right angle to the direction of the valve stem, as well as while allowing the displacement of the axis of a diaphragm 16 side and the axis of the valve body 29 side, by connecting the one end portion of the valve stem 30 to the diaphragm rod 68 of the diaphragm aggregate 71.

Further, the cap member 74 is inserted in and fixed to the insertion recess part 72 of the diaphragm rod 68 by use of the holding plate 75, and thereafter the valve stem 30 is connected to the cap member 74 by use of the engagement ring 78. This makes it easy to connect the diaphragm rod 68 and the valve stem 30.

In addition, the diaphragm rod 68, which continues to the valve body 29, is connected to the diaphragm 16 while penetrating the center portion of the diaphragm 16. The adjustment screw 86 on whose outer peripheral surface the male screw 84 is carved, and to whose end surface opposite from the diaphragm rod 68 the engagement recess part 85 is provided, is fitted to and supported by the diaphragm rod 68 inside of the spring chamber 82 in such a way as to be capable of revolving about the axis. The male screw 84 in the outer periphery of the adjustment screw 86 is screwed to the inner periphery of the spring reception member 87 which engages with the inner periphery of the diaphragm cover 22 in such a way as to be incapable of revolving about the axis coaxial with the rotary axis of the adjustment screw 86, and which is housed in the spring chamber 82 in such a way as to be capable of moving in the axial direction. The diaphragm spring 83, which is a coil spring, is compressedly installed between the spring reception member 87 and the diaphragm cover 22.

Accordingly, the spring load of the diaphragm spring 83 configured to exert the spring force for biasing the diaphragm 16 in the direction in which the volume of the pressure working chamber 80 is reduced is adjusted by expanding or contracting the diaphragm spring 83 by moving the spring reception member 87 in a direction along the axis of the adjustment screw 86 through rotational manipulation of the adjustment screw 86 with a tool engaged with the engagement recess part 85 for the purpose of changing the axial location of the spring reception member 87. To this end, the tool insertion hole 88 is provided to the diaphragm cover 22 in a position opposed to the end surface of the adjustment screw 86 to which the engagement recess part 85 is provided, and the cap 89 configured to close the tool insertion hole 88 is attached to the diaphragm cover 22. In other words, the adjustment spring 86 is housed in the spring chamber 82, and the tool insertion hole 88 is closed by the cap 89. This makes the adjustment screw 87 invisible from the outside, and makes the adjustment screw 87 less likely to be manipulated by end users undesirably.

The following constitution is employed in order to heat the LPG fuel, which circulates through the low-pressure gas passage 93, with the engine cooling water as the heat source. The passage-longitudinal-direction protruding wall 125, which extends in the normal circulation direction 124 of the LPG fuel from the starting point PS to the end point PE of the low-pressure gas passage 93, and the multiple passage-width-direction protruding walls 126, ..., which are orthogonal to the normal circulation direction 124 and extend in the width direction of the low-pressure gas passage 93, are provided to the valve housing 21 in such a way as to enter the low-pressure gas passage 93. The multiple passage chambers 127, ... as well as the multiple first and second communicating passages 128, ..., 129, ..., which make mutually adjacent ones of the passage chambers 127, ... communicate with each other in a way that makes the LPG fuel sequentially circulate through the passage chambers 127, ..., are formed in the low-pressure gas passage 93 through cooperation among the valve housing 21, the passage-longitudinal-direction protruding wall 125 and the passage-width-direction protruding walls 126, ... . The first and second communicating passages 128, ..., 129, ... are disposed in a way that makes the LPG fuel sequentially circulate through the multiple passage chambers 127, ... from the starting point PS to the end point PE of the low-pressure gas passage 93 while passing through the passage chambers 127, ... zigzaggedly.

This elongates the circulation path of the LPG fuel in the low-pressure gas passage 93, and increases the area of the contact of the LPG fuel with the valve housing 21, the passage-longitudinal-direction protruding wall 125 and the passage-width-direction protruding walls 126, ..., as well as enhances the efficiency of heat transfer to the LPG fuel. Furthermore, this can remarkably enhance the efficiency of heat transfer when the flow rate per unit time is large, compared with the prior art using fins.

The first communicating passages 128, ..., each of which connects two corresponding passage chambers 127, 127 adjacent to each other with the passage-longitudinal-direction protruding wall 125 interposed in between, and the second communicating passages 129, ..., each of which connects two corresponding passage chambers 127, 127 adjacent to each other with one corresponding passage-width-direction protruding wall 126 interposed in between, are disposed at the opposite side from each other in the protruding direction of the passage-longitudinal-direction protruding wall 125. For this reason, the LPG fuel not only circulates through the inside of the low-pressure gas passage 93 zigzaggedly, but also follows the winding path in the direction orthogonal to the width direction of the low-pressure gas passage 93. In other words, the low-pressure gas passage 93 is configured such that the LPG fuel circulates through the low-pressure gas passage 93 via the three-dimensional circulation path including the flows in the width direction of the low-pressure gas passage 93 and the flows in the direction orthogonal to the width direction of the low-pressure gas passage 93 in combination. This elongates the circulation path of the LPG fuel, and increases the area of the contact of the LPG fuel with the heat transfer surfaces, as well as enhances the efficiency of heat transfer to the LPG fuel.

Moreover, the length of the passage chambers 127, ... in the normal circulation direction 124 is set larger than the width of the passage chambers 127, ... in the width direction of the low-pressure gas passage 93. The heated fluid passage 110, through which the engine cooling water circulates, is disposed in a way that makes the heat source interpose the bottom wall 92a, which is closer to the second communication passages 129 out of the gas passage cover member 18 and the bottom wall 92a of the gas passage groove 92 which face the low-pressure gas passage 93 in the protruding direction of the passage-longitudinal-direction protruding wall 125, between the heat source and the low-pressure gas passage 93. These make it possible to enhance the efficiency of heat transfer more by putting the LPG fuel, which circulates in the normal circulation direction 124 while passing through the second communicating passages 129, ..., closer to the outer wall 92a for a longer length of time.

Besides, the passage-longitudinal-direction protruding wall 125 is projectingly provided to the bottom wall 92a which is the gas passage wall at the side of the second communicating passages 129. This makes it easy for the heat from the engine cooling water to be transferred to the passage-longitudinal-direction protruding wall 125. Accordingly, it is possible to enhance the efficiency of heat transfer by making more of the heat transferred to the LPG fuel from the passage-longitudinal-direction protruding wall 125 which extends long in the normal circulation direction 124 of the low-pressure gas passage 93.

In the meantime, the body 17 and the gas passage cover member 18, which is attached to one surface of the body 17, constitute at least part of the valve housing 21. The low-pressure gas passage 93 is formed from: the gas passage groove 92 provided to one surface of the body 17; and the gas passage cover member 18 covering the gas passage groove 92. The passage-longitudinal-direction protruding wall 125 and the passage-width-direction protruding walls 126 are each projectingly provided to either the bottom wall 92a of the gas passage groove 92 or the gas passage cover member 18. These make it easy to form the passage-longitudinal-direction protruding wall 125 and the passage-width-direction protruding walls 126, ....

Further, one of the passage-longitudinal-direction protruding wall 125 and the passage-width-direction protruding walls 126, ... are projectingly provided to one of the bottom wall 92a of the gas passage groove 92 and the gas passage cover member 18, while the other of the passage-longitudinal-direction protruding wall 125 and the passage-width-direction protruding walls 126, ... are projectingly provided to the other of the bottom wall 92a of the gas passage groove 92 and the gas passage cover member 18. Accordingly, the passage-longitudinal-direction protruding wall 125 and the passage-width-direction protruding walls 126, ... are projectingly provided to the bottom wall 92a of the gas passage groove 92 and the gas passage cover member 18 by not being provided to the same component. This makes it further easier to form the passage-longitudinal-direction protruding wall 125 and the passage-width-direction protruding walls 126, ....

Moreover, the first communicating passages 128, ... are formed between the tip end of the passage-longitudinal-direction protruding wall 125 and any one of the bottom wall 92a of the gas passage groove 92 and the gas passage cover member 18, while the cutouts 130 ... configured to form the second communicating passages 129, ... between the tip ends of the passage-width-direction protruding passages 126, ... and any one of the gas passage cover member 18 and the bottom wall 92a of the gas passage groove 92 are provided to the tip ends of the passage-width-direction protruding passages 126, ..... This makes it easy to form the first and second communicating passages 128, ..., 129, ....

In addition, the heated fluid passage groove 111 is provided to the opposite surface of the body 17 which is opposite from the low-pressure gas passage 93. With the heated fluid passage 110, through which the engine cooling water circulates, formed between the heated fluid passage cover member 19 and the heated fluid passage groove 111, the heated fluid passage cover member 19 is attached to the opposite surface of the body 17 while covering the heated fluid passage groove 111. These make it possible to form the heated fluid passage 110 easily, and enhance the efficiency of heat transfer by enabling the heated fluid passage 110 to be disposed close to the low-pressure gas passage 93, as well as make it possible construct the heating device in a compact size.

Furthermore, the engine cooling water is guided to at least either the inside of the passage-longitudinal-direction protruding wall 125 or the insides of the respective passage-width-direction protruding walls 126, .... This effectively heats at least one of the passage-longitudinal-direction protruding wall 125 and the passage-width-direction protruding walls 126, ... with the engine cooling water, and makes at least one of the passage-longitudinal-direction protruding wall 125 and the passage-width-direction protruding walls 126, ... function effectively as the heat transferring surfaces for the LPG fuel, as well as accordingly makes it possible to enhance the efficiency of heat transfer.

Moreover, the engine cooling water is guided to the inside of the protruding wall projectingly provided to the body 17, in this embodiment, the inside of the passage-longitudinal-direction protruding wall 125 projectingly provided to the bottom wall 92a of the gas passage groove 92, out of the passage-longitudinal-direction protruding wall 125 and the passage-width-direction protruding walls 126, ... . This makes it possible to build the structure for guiding the engine cooling water to the inside of the passage-longitudinal-direction protruding wall 125 easily.

In the meantime, the LPG fuel is likely to stagnate near the wall surfaces, of the passage-width-direction protruding walls 126, ..., which face downstream side in the normal circulation direction 124. Because, however, the minute clearances 131, ... are formed among the passage-width-direction protruding walls 126, which are projectingly provided to the gas passage cover member 18 being the gas passage wall constituting one side surface of the low-pressure gas passage 93, the passage-longitudinal-direction protruding wall 125 and the opposite gas passage wall of the low-pressure gas passage 93, the LPG fuel becomes less likely to stagnate there by making a small amount of LPG fuel flow through the minute clearances 131, ... as indicated with thin-lined arrows in FIG. 12 and FIG. 13. Thus, of the passage-width-direction protruding walls 126, ..., their wall surfaces facing downstream in the normal circulation direction 124 are used effectively as heat transfer surfaces. This can contribute to the enhancing the efficiency of heat transfer.

Besides, if the foregoing heating structure using the engine cooling water is applied to the pressure reducing valve including the low-pressure gas passage 93 in which the LPG fuel whose pressure is reduced circulates, the pressure reducing valve for LPG fuel which has an excellent efficiency of heat transfer can be obtained. In addition, because the body 17 in which the valve mechanism 15 is housed is constructed as a part of the valve housing 21 which is the passage forming body for forming the low-pressure gas passage 93, it is possible to construct the pressure reducing valve for LPG fuel, to which the heating device is annexed, in a compact size.

### EMBODIMENT 2

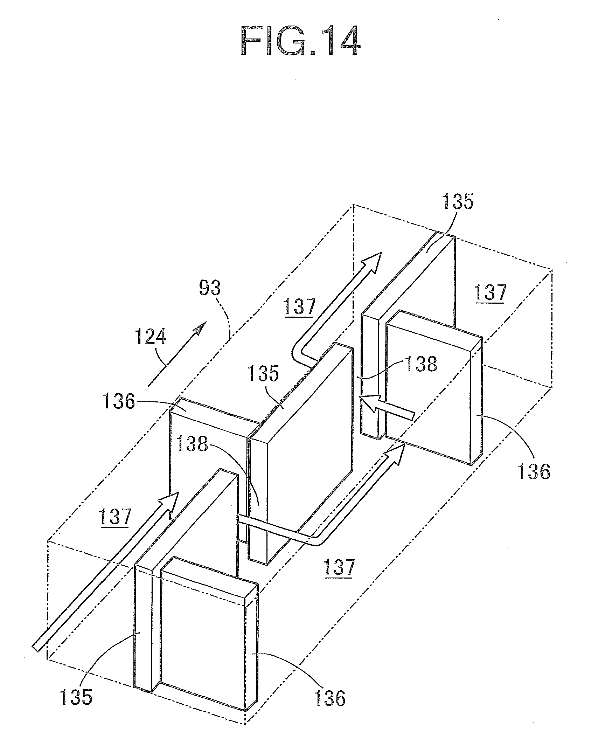

Descriptions will be provided for Embodiment 2 of the present invention by referring to FIG. 14. Multiple passage-longitudinal-direction protruding walls 135, 135, ..., which extend in the normal circulation direction 124 of the LPG fuel, and multiple passage-width-direction protruding walls 136, ..., which are orthogonal to the normal circulation direction 124 and extend in the width direction of the low-pressure gas passage 93, are made to enter the low-pressure gas passage 93.

In addition, the passage-longitudinal-direction protruding walls 135, 135, ... are disposed at intervals in the normal circulation direction 124 in a way that makes communicating passages 138, ... formed between the passage-longitudinal-direction protruding walls 135, 135, ... . The passage-width-direction protruding walls 136, ... are disposed in the normal circulation direction 124 in such a way as to be situated alternately at the opposite sides of one end portions of the passage-longitudinal-direction protruding walls 135, 135, .... Multiple passage chambers 137, ... are disposed in the inside of the low-pressure gas passage 93 in such a way as to be staggered between two rows, in one of which one series of paired neighboring passage-width-direction protruding walls 136, ... are arranged in the normal circulation direction 124, and in the other of which the other series of paired neighboring passage-width-direction protruding walls 136, ... are arranged in the normal circulation direction 124. The communicating passages 138, ... are disposed in such a way as to each connect the corresponding passage chambers 137 which are arranged in the respectige twosides of the low-pressure gas passage 93 in the width direction.

Embodiment 2 also makes the LPG fuel sequentially pass through the multiple passage chambers 137, ... zigzaggedly as indicated with white arrows in FIG. 14, and elongates the circulation path of the LPG fuel in the low-pressure gas passage 93, as well as enhances the efficiency of heat transfer to the LPG fuel.

Although the foregoing descriptions have been provided for embodiments of the present invention, the present invention is not limited to the above-described embodiments. Various changes in design can be made within a scope not departing from the gist of the present invention.

## Claims

1. An LPG fuel heating device in which a heat source for heating LPG fuel circulating through a gas passage (93) formed in a passage forming body (21) is placed in the passage forming body (21) outside of the gas passage (93), **characterized in that**
one or a plurality of passage-longitudinal-direction protruding walls (125, 135) and a plurality of passage-width-direction protruding walls (126, 136) are provided to the passage forming body (21) in such a way as to enter the gas passage (93), the passage-longitudinal-direction protruding wall (125, 135) extending in a normal circulation direction (124) of the LPG fuel from a starting point (PS) to an end point (PE) of the gas passage (93), the passage-width-direction protruding walls (126, 136) being orthogonal to the normal circulation direction (124) and extending in a width direction of the gas passage (93),
a plurality of passage chambers (127, 137) and a plurality of communicating passages (128, 129; 138) are formed in the gas passage (93) through cooperation among the passage forming body (21), the passage-longitudinal-direction protruding wall (125, 135) and the passage-width-direction protruding walls (126, 136), the communicating passages (128, 129; 138) configured to make mutually adjacent ones of the passage chambers (127, 137) communicate with each other in a way that makes the LPG fuel sequentially circulate through the passage chambers (127, 137), and
the communicating passages (128, 129; 138) are disposed in a way that makes the LPG fuel sequentially circulate through the plurality of passage chambers (127, 137) from the starting point (PS) to the end point (PE) of the gas passage (93) zigzaggedly.

2. The LPG fuel heating device according to claim 1, wherein
a first communicating passage (128) and a second communicating passage (129) are disposed on sides opposite to each other in a protruding direction of the passage-longitudinal-direction protruding wall (125), the first communicating passage (128) connecting two passage chambers (127) which are adjacent to each other with the passage-longitudinal-direction protruding wall (125) interposed in between, the second communicating passage (129) connecting two passage chambers (127) which are adjacent to each other with one corresponding passage-width-direction protruding wall (126) interposed in between.

3. The LPG fuel heating device according to claim 2, wherein
a length of the passage chamber (127) in the normal circulation direction (124) is set larger than a width of the passage chamber (127) in the width direction of the gas passage (93), and
the heat source is placed in a location where a gas passage wall (92a) on a side of the second communicating passage (129) among paired gas passage walls (18, 92a) which face the gas passage (93) in the protruding direction of the passage-longitudinal-direction protruding wall (125) is interposed between the heat source and the gas passage (93).

4. The LPG fuel heating device according to claim 3, wherein
the passage-longitudinal-direction protruding wall (125) is projectingly provided to the gas passage wall (92a) on the side of the second communicating passage (129).

5. The LPG fuel heating device according to any one of claims 1 to 4, wherein
a body (17) and a gas passage cover member (18), which is attached to one surface of the body (17), constitute at least part of the passage forming body (21),
the gas passage (93) is formed from a gas passage groove (92) provided to the one surface of the body (17) and the gas passage cover member (18) configured to cover the gas passage groove (92), and
the passage-longitudinal-direction protruding wall (125) and the passage-width-direction protruding wall (126) are each projectingly provided to either a bottom wall (92a) of the gas passage groove (92) or the gas passage cover member (18).

6. The LPG fuel heating device according to claim 5, wherein
one of the passage-longitudinal-direction protruding wall (125) and the passage-width-direction protruding wall (126) is projectingly provided to one of the bottom wall (92a) of the gas passage groove (92) and the gas passage cover member (18), while the other of the passage-longitudinal-direction protruding wall (125) and the passage-width-direction protruding wall (126) is projectingly provided to the other of the bottom wall (92a) of the gas passage groove (92) and the gas passage cover member (18).

7. The LPG fuel heating device according to claim 5 or 6, wherein
the first communicating passage (128) is formed between a tip end of the passage-longitudinal-direction protruding wall (125) and the bottom wall (92a) of the gas passage groove (92) or the gas passage cover member (18), while a cutout (130) is provided to a tip end of the passage-width-direction protruding wall (126), the cutout (130) configured to form the second communicating passage (129) between the tip end of the passage-width-direction protruding wall (126) and the gas passage cover member (18) or the bottom wall (92a) of the gas passage groove (92).

8. The LPG fuel heating device according to any one of claims 5 to 7, wherein
a heated fluid passage groove (111) is provided to an opposite surface, which is on a side opposite from the gas passage (93), of the body (17) and
a heated fluid passage cover member (19) is attached to the opposite surface of the body (17) while covering the heated fluid passage groove (111), a heated fluid passage (110) through which engine cooling water as the heat source circulates being formed between the heated fluid passage cover member (19) and the heated fluid passage groove (111).

9. The LPG fuel heating device according to any one of claims 1 to 8, wherein
engine cooling water as the heat source is guided to at least one of the inside of the passage-longitudinal-direction protruding wall (125) and the inside of the passage-width-direction protruding wall (126).

10. The LPG fuel heating device according to claim 8 or 9, wherein
the engine cooling water is guided to the inside of a protruding wall (125), which is projectingly provided to the body (17), among the passage-longitudinal-direction protruding wall (125) and the passage-width-direction protruding wall (126).

11. The LPG fuel heating device according to claim 10, wherein
the passage-longitudinal-direction protruding wall (125) is projectingly provided to the bottom wall (92a) of the gas passage groove (92), while the passage-width-direction protruding walls (126) are projectingly provided to the gas passage cover member (19), and
the engine cooling water is guided to the inside of the passage-longitudinal-direction protruding wall (125).

12. The LPG fuel heating device according to any one of claims 1 to 11, wherein
a minute clearance (131) is formed between the passage-width-direction protruding wall (126), which is projectingly provided to a gas passage wall (18) forming one side surface of the gas passage (93), and the passage-longitudinal-direction protruding wall (125) or another gas passage wall of the gas passage (93).

13. An LPG fuel heating device in which a heat source for heating LPG fuel circulating through a gas passage (93) formed in a passage forming body (21) is placed in the passage forming body (21) outside of the gas passage (93),
**characterized in that**
the gas passage (93) is formed in a way that makes the LPG fuel circulate via a three-dimensional circulation path including a flow in a width direction of the gas passage (93) and a flow in a direction orthogonal to the width direction of the gas passage (93) in combination.

14. A pressure reducing valve for LPG fuel, wherein
the LPG fuel heating device according to any one of claims 1 to 13 is annexed to the pressure reducing valve for LPG fuel.

15. The pressure reducing valve for LPG fuel according to claim 14, wherein
a body (17) configured to house a valve mechanism (15) is formed as part of the passage forming body (21).
